# EUROPEAN PATENT APPLICATION

(11) **EP 4 764 783 A1**
(43) Date of publication of application: **24.06.2026**
(21) Application number: 25214672.5
(22) Date of filing: 10.11.2025
(51) Int. Cl.: G06F 1/20, G06F 1/3203, G06F 1/3206, G06F 9/48, G06F 9/50, H05K 7/20

(54) **SYSTEMS, APPARATUS, AND METHODS FOR ENERGY HARVESTING IN DATA CENTERS**

(30) Priority: 23.12.2024 US 202418999992
(71) Applicant: INTEL Corporation, Santa Clara, CA 95054 (US)
(72) Inventor: MACDONALD, Mark Angus, Beaverton, 97006 (US); SEDAYAO, Jeffrey Christopher, San Jose, 95131 (US); SUBRAHMANYAM, Prabhakar, San Jose, 95126 (US); PANG, Ying Feng, San Jose, 95131 (US); BANGA, Mainak, Folsom, 96530 (US)
(74) Representative: Maiwald GmbH

(57) **Abstract**

Systems, apparatus, and methods for energy harvesting in data centers are disclosed. An example apparatus includes interface circuitry; machine-readable instructions; and at least one processor circuit to at least one of instantiate or execute the machine-readable instructions to estimate first power consumption values for electronic components of a first rack; estimate second power consumption values for electronic components of a second rack; determine a first selection score for the first rack based on the first power consumption values and a second selection score for the second rack based on the second power consumption values; select a first electronic component of the first rack or a second electronic component of the second rack to receive a workload based on the first selection score and the second selection score; and cause the selected one of the first electronic component or the second electronic component to perform the workload.

## Description

### BACKGROUND

Heat generated during operation of electronic components in a data center can be captured and reused for purposes such as heating a building.

### BRIEF DESCRIPTION OF THE DRAWINGS

FIG. 1 illustrates one or more example environments in which teachings of this disclosure may be implemented.
FIG. 2 illustrates at least one example of a data center for executing workloads with disaggregated resources.
FIG. 3 illustrates at least one example of a pod that may be included in the data center of FIG. 2.
FIG. 4 is a perspective view of at least one example of a rack that may be included in the pod of FIG. 3.
FIG. 5 is a side elevation view of the rack of FIG. 4.
FIG. 6 is a perspective view of the rack of FIG. 4 having a sled mounted therein.
FIG. 7 is a is a block diagram of at least one example of a top side of the sled of FIG. 6.
FIG. 8 is a block diagram of at least one example of a bottom side of the sled of FIG. 7.
FIG. 9 is a block diagram of an example environment in which example workload management circuitry operates to control distribution of workloads to electronic component(s) to facilitate energy harvesting.
FIG. 10 is a block diagram of another example environment in which the example workload management circuitry of FIG. 9 to control distribution of workloads to electronic component(s) to facilitate energy harvesting and, in particular, electrical energy harvesting.
FIG. 11 is a block diagram of an example implementation of the workload management circuitry of FIGS. 9 and/or 10.
FIGS. 12A-12C set forth a flowchart representative of example machine-readable instructions and/or example operations that may be executed, instantiated, and/or performed by example programmable circuitry to implement the workload management circuitry 902 of FIG. 11.
FIG. 13 is a flowchart of an example implementation of block 1202 of FIGS. 12A-12C.
FIG. 14 is a flowchart of example implementation of block 1244 of FIGS. 12A-12C.
FIGS. 15A-15C set forth another flowchart representative of example machine-readable instructions and/or example operations that may be executed, instantiated, and/or performed by example programmable circuitry to implement the workload management circuitry 902 of FIG. 11.
FIG. 16 illustrates an example assembly including a heat source and a thermoelectric generator in accordance with teachings of this disclosure.
FIG. 17 sets forth another flowchart representative of example machine-readable instructions and/or example operations that may be executed, instantiated, and/or performed by example programmable circuitry to implement the workload management circuitry 902 of FIG. 11.
FIG. 18 is a flowchart of example implementation of block 1706 of FIG. 17.
FIG. 19 sets forth another flowchart representative of example machine-readable instructions and/or example operations that may be executed, instantiated, and/or performed by example programmable circuitry to implement the workload management circuitry 902 of FIG. 11.
FIG. 20 is a block diagram of an example processing platform including programmable circuitry structured to execute, instantiate, and/or perform the example machine-readable instructions and/or perform the example operations of FIGS. 12A-12C, 13, 14, 15A-15C, 17, 18, and 19 to implement the workload management circuitry 902 of FIG. 11.
FIG. 21 is a block diagram of an example implementation of the programmable circuitry of FIG. 20.
FIG. 22 is a block diagram of another example implementation of the programmable circuitry of FIG. 20.

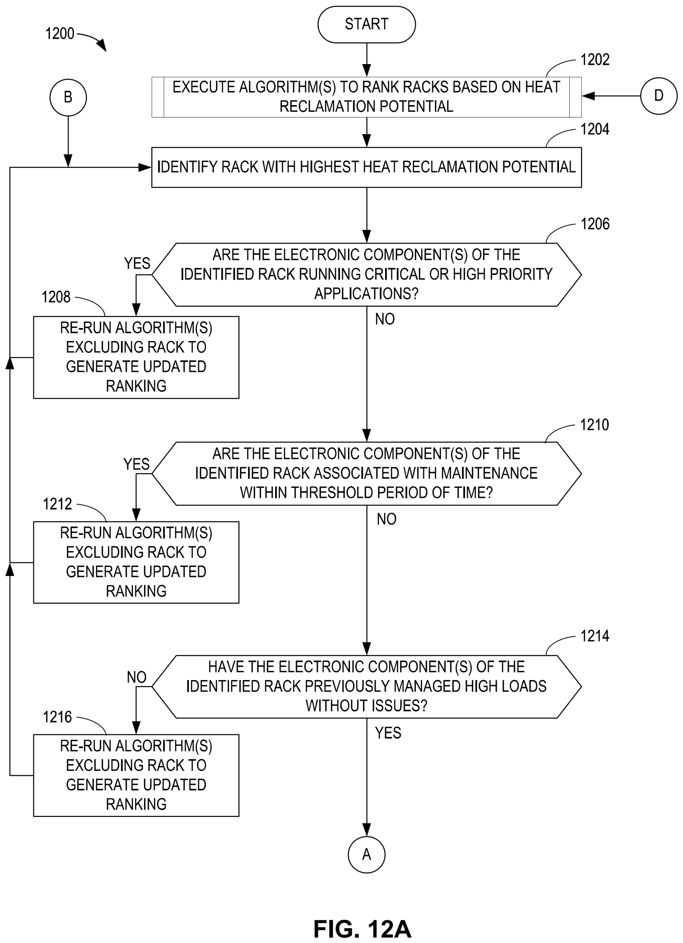

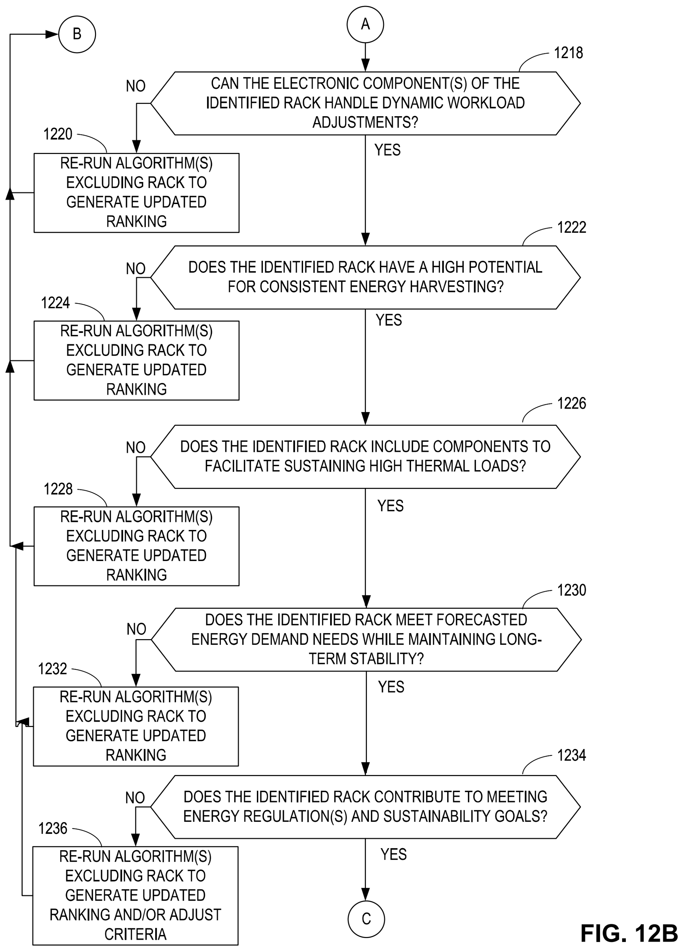

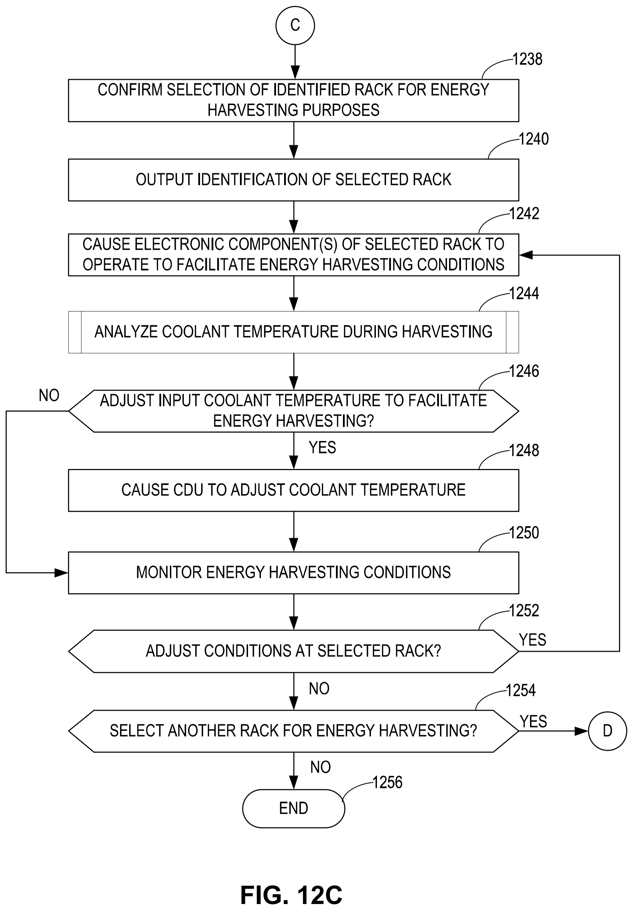

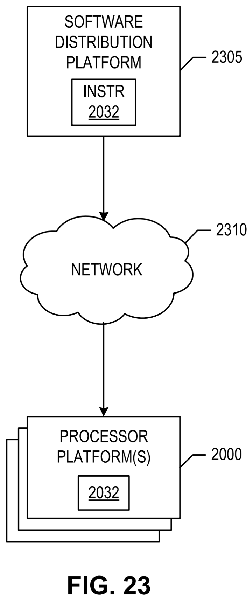

FIG. 23 is a block diagram of an example software/firmware/instructions distribution platform (e.g., one or more servers) to distribute software, instructions, and/or firmware (e.g., corresponding to the example machine-readable instructions of FIGS. 12A-12C, 13, 14, 15A-15C, 17, 18, and 19) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Electronic components such as servers operating in a data center generate significant amounts of heat. Efforts have been made to reuse the heat output by the electronic components. For instance, the heat generated at a data center can be used to heat water provided to buildings and/or to heat the buildings themselves. However, efforts to reclaim energy from a data center may not be efficient. For instance, electronic components such as servers are typically stored in racks in the data center. Known efforts to reclaim energy in data centers do not typically attempt to increase (e.g., maximize) the amount of energy captured and do not consider factors such as workloads assigned to electronic components in each rack, thermal design power of the electronic components, heat flux generated at each rack, cooling needs for the electronic components, etc. Further, known workload scheduling efforts typically distribute workloads to avoid creating hot spots at an electronic component or within a rack. By avoiding the creation of hot spots, the amount of heat that can be recaptured for other purposes is limited. As a result of inefficient and/or insufficient energy reclamation, opportunities to reuse the heat for purposes such as electrical generation remain untapped.

Disclosed herein are example systems, apparatus, and methods to harvest energy at data centers via adaptive and dynamic management of workloads assigned to electronic component(s) of respective racks. Some examples disclosed herein execute an algorithm (e.g., an artificial intelligence (AI) algorithm) using parameters such as temperature of the electronic components at each rack in the data center, historical performance data of the electronic components, thermal design power, maintenance schedules, workload type, etc. In examples disclosed herein, the algorithm controls the assignment of workloads to electronic component(s) of a rack to concentrate the generation of heat at certain racks. As a result, examples disclosed herein increase the amount of heat that can be reclaimed as compared to if the workloads were distributed to electronic components between racks without consideration for increasing heat loads for harvesting purposes. Some examples disclosed herein adjust properties (e.g., temperature) of a coolant that is provided to the rack(s) selected for energy harvesting to increase (e.g., maximum) temperature differentials between the inlet coolant and the outlet coolant to increase the amount of heat recaptured via the coolant.

Some examples disclosed herein can be used to harvest energy for heat-to-electrical energy conversion via a thermoelectric generator (TEG) in a data center. A TEG can convert heat into electricity (e.g., current) via temperature differences between opposing sides of thermoelectric material due to, for example, differences in incoming and outgoing heat. However, the amount of electric current generated can vary and/or be inconsistent over time based on, for example, the workloads assigned to electronic component(s) with which the TEG is associated and, thus, the amount of heat output and corresponding temperature gradient. Examples disclosed herein can be used to create larger thermal gradients or heat differentials at the TEG to produce electrical energy by managing workload(s) assigned to the electronic component(s). Examples disclosed herein schedule workloads to increase (e.g., maximize) heat generated by certain electronic component(s) (e.g., sever(s), graphical processing unit(s)) while moving other electronic component(s) to lower power states. Some examples disclosed herein transform electronic component temperature data that is provided to a workload scheduling algorithm to reverse the algorithm's preference for avoiding hotspots when assigning workloads, thereby using job scheduling to increase or concentrate heat output by electronic components that are already generating heat. As a result of increased utilization of certain electronic components, the thermal gradient for power generation at a TEG associated with the selected electronic component(s) is increased. The power generated via the TEG(s) in the data center due to the increased thermal gradient can be used for, for example, battery charging.

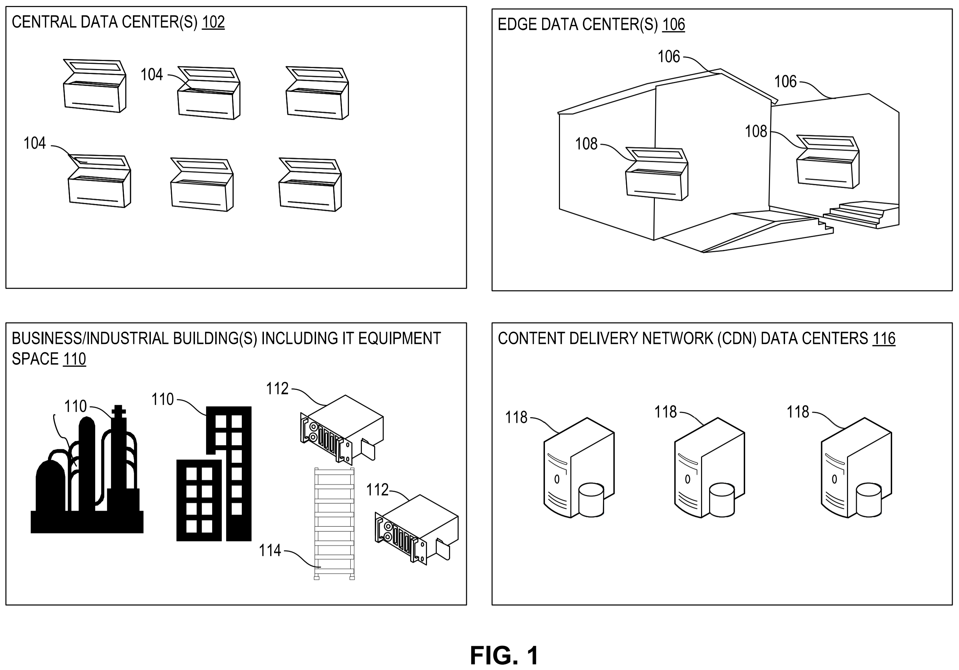

FIG. 1 illustrates one or more example environments in which teachings of this disclosure may be implemented. The example environment(s) of FIG. 1 can include one or more central data centers 102. The central data center(s) 102 can store a large number of servers used by, for instance, one or more organizations for data processing, storage, etc. As illustrated in FIG. 1, the central data center(s) 102 include a plurality of immersion tank(s) 104 to facilitate cooling of the servers and/or other electronic components stored at the central data center(s) 102. The immersion tank(s) 104 can provide for single-phase cooling or two-phase cooling.

The example environments of FIG. 1 can be part of an edge computing system. For instance, the example environments of FIG. 1 can include edge data centers or micro-data centers 106. The edge data center(s) 106 can include, for example, data centers located at a base of a cell tower. In some examples, the edge data center(s) 106 are located at or near a top of a cell tower and/or other utility pole. The edge data center(s) 106 include respective housings that store server(s), where the server(s) can be in communication with, for instance, the server(s) stored at the central data center(s) 102, client devices, and/or other computing devices in the edge network. Example housings of the edge data center(s) 106 may include materials that form one or more exterior surfaces that partially or fully protect contents therein, in which protection may include weather protection, hazardous environment protection (e.g., electromagnetic interference (EMI), vibration, extreme temperatures), and/or enable submergibility. Example housings may include power circuitry to provide power for stationary and/or portable implementations, such as alternating current (AC) power inputs, direct current (DC) power inputs, AC/DC or DC/AC converter(s), power regulators, transformers, charging circuitry, batteries, wired inputs and/or wireless power inputs. As illustrated in FIG. 1, the edge data center(s) 106 can include immersion tank(s) 108 to store server(s) and/or other electronic component(s) located at the edge data center(s) 106.

The example environment(s) of FIG. 1 can include buildings 110 for purposes of business and/or industry that store information technology (IT) equipment in, for example, one or more rooms of the building(s) 110. For example, as represented in FIG. 1, server(s) 112 can be stored with server rack(s) 114 that support the server(s) 112 (e.g., in an opening of slot of the rack 114). In some examples, the server(s) 112 located at the buildings 110 include on-premise server(s) of an edge computing network, where the on-premise server(s) are in communication with remote server(s) (e.g., the server(s) at the edge data center(s) 106) and/or other computing device(s) within an edge network.

The example environment(s) of FIG. 1 include content delivery network (CDN) data center(s) 116. The CDN data center(s) 116 of this example include server(s) 118 that cache content such as images, webpages, videos, etc. accessed via user devices. The server(s) 118 of the CDN data centers 116 can be disposed in immersion cooling tank(s) such as the immersion tanks 104, 108 shown in connection with the data centers 102, 106.

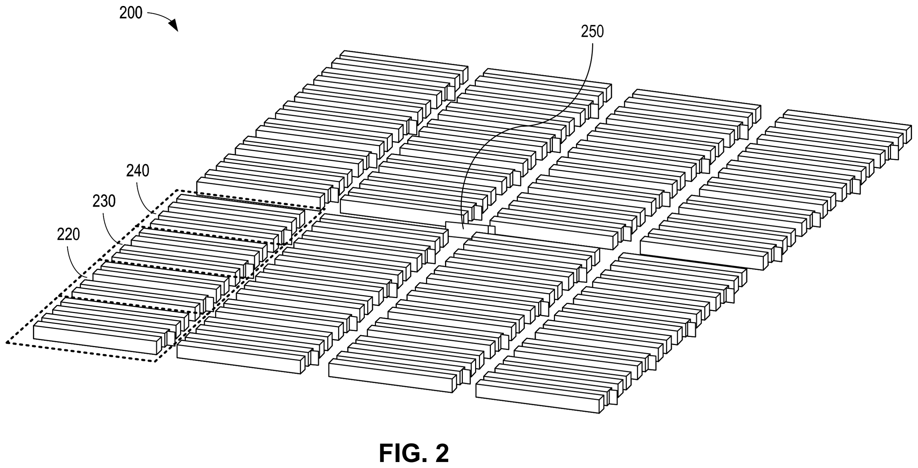

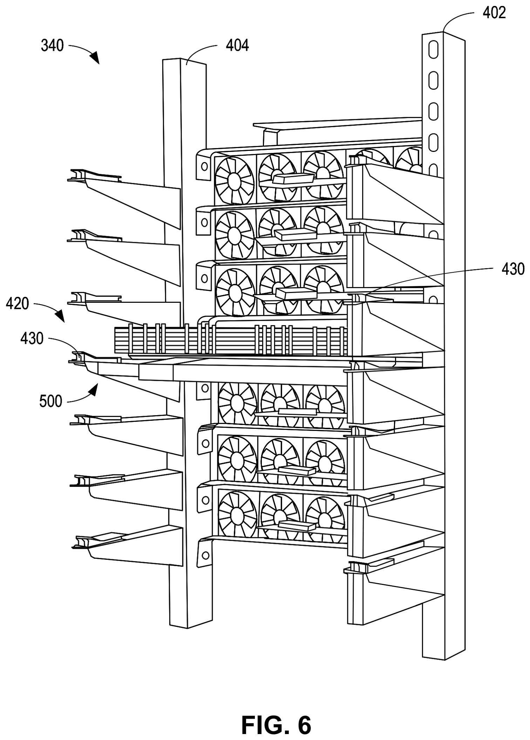

In some instances, the example data centers 102, 106, 116 and/or building(s) 110 of FIG. 1 include servers and/or other electronic components that are cooled independent of immersion tanks (e.g., the immersion tanks 104, 108) and/or an associated immersion cooling system. That is, in some examples, some or all of the servers and/or other electronic components in the data centers 102, 106, 116 and/or building(s) 110 can be cooled by air and/or liquid coolants without immersing the servers and/or other electronic components therein. Thus, in some examples, the immersion tanks 104, 108 of FIG. 1 may be omitted. Further, the example data centers 102, 106, 116 and/or building(s) 110 of FIG. 1 can correspond to, be implemented by, and/or be adaptations of the example data center 200 described in further detail below in connection with FIGS. 2-16.

Although a certain number of cooling tank(s) and other component(s) are shown in the figures, any number of such components may be present. Also, the example cooling data centers and/or other structures or environments disclosed herein are not limited to arrangements of the size that are depicted in FIG. 1. For instance, the structures containing example cooling systems and/or components thereof disclosed herein can be of a size that includes an opening to accommodate service personnel, such as the example data center(s) 106 of FIG. 1, but can also be smaller (e.g., a "doghouse" enclosure). For instance, the structures containing example cooling systems and/or components thereof disclosed herein can be sized such that access (e.g., the only access) to an interior of the structure is a port for service personnel to reach into the structure. In some examples, the structures containing example cooling systems and/or components thereof disclosed herein can be sized such that only a tool can reach into the enclosure because the structure may be supported by, for a utility pole or radio tower, or a larger structure.

FIG. 2 illustrates an example data center 200 in which disaggregated resources may cooperatively execute one or more workloads (e.g., applications on behalf of customers). The illustrated data center 200 includes multiple platforms 210, 220, 230, 240 (referred to herein as pods), each of which includes one or more rows of racks. Although the data center 200 is shown with multiple pods, in some examples, the data center 200 may be implemented as a single pod. As described in more detail herein, a rack may house multiple sleds. A sled may be primarily equipped with a particular type of resource (e.g., memory devices, data storage devices, accelerator devices, general purpose programmable circuitry) that can be logically coupled to form a composed node. Some such nodes may act as, for example, a server. In the illustrative example, the sleds in the pods 210, 220, 230, 240 are connected to multiple pod switches (e.g., switches that route data communications to and from sleds within the pod). The pod switches, in turn, connect with spine switches 250 that switch communications among pods (e.g., the pods 210, 220, 230, 240) in the data center 200. In some examples, the sleds may be connected with a fabric using Intel Omni-Path^{™} technology. In other examples, the sleds may be connected with other fabrics, such as InfiniBand or Ethernet. As described in more detail herein, resources within the sleds in the data center 200 may be allocated to a group (referred to herein as a "managed node") containing resources from one or more sleds to be collectively utilized in the execution of a workload. The workload can execute as if the resources belonging to the managed node were located on the same sled. The resources in a managed node may belong to sleds belonging to different racks, and even to different pods 210, 220, 230, 240. As such, some resources of a single sled may be allocated to one managed node while other resources of the same sled are allocated to a different managed node (e.g., first programmable circuitry assigned to one managed node and second programmable circuitry of the same sled assigned to a different managed node).

A data center including disaggregated resources, such as the data center 200, can be used in a wide variety of contexts, such as enterprise, government, cloud service provider, and communications service provider (e.g., a telecommunications provider, a telephone company (e.g., a Telco), as well in a wide variety of sizes, from cloud service provider mega-data centers that consume over 200,000 sq. ft. to single- or multi-rack installations for use in base stations.

In some examples, the disaggregation of resources is accomplished by using individual sleds that include predominantly a single type of resource (e.g., compute sleds including primarily compute resources, memory sleds including primarily memory resources). The disaggregation of resources in this manner, and the selective allocation and deallocation of the disaggregated resources to form a managed node assigned to execute a workload, improves the operation and resource usage of the data center 200 relative to typical data centers. Such typical data centers include hyperconverged servers containing compute, memory, storage and perhaps additional resources in a single chassis. For example, because a given sled will contain mostly resources of a same particular type, resources of that type can be upgraded independently of other resources. Additionally, because different resource types (programmable circuitry, storage, accelerators, etc.) typically have different refresh rates, greater resource utilization and reduced total cost of ownership may be achieved. For example, a data center operator can upgrade the programmable circuitry throughout a facility by only swapping out the compute sleds. In such a case, accelerator and storage resources may not be contemporaneously upgraded and, rather, may be allowed to continue operating until those resources are scheduled for their own refresh. Resource utilization may also increase. For example, if managed nodes are composed based on requirements of the workloads that will be running on them, resources within a node are more likely to be fully utilized. Such utilization may allow for more managed nodes to run in a data center with a given set of resources, or for a data center expected to run a given set of workloads, to be built using fewer resources.

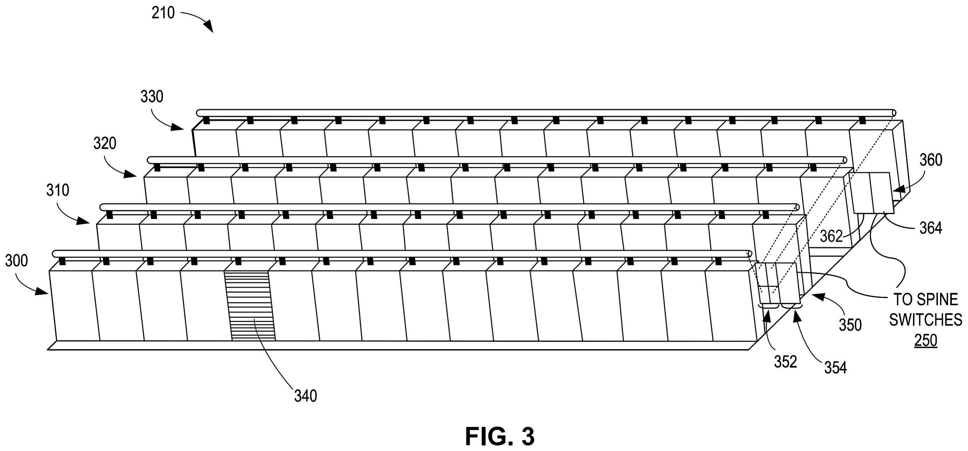

Referring now to FIG. 3, the pod 210, in the illustrative example, includes a set of rows 300, 310, 320, 330 of racks 340. Individual ones of the racks 340 may house multiple sleds (e.g., sixteen sleds) and provide power and data connections to the housed sleds, as described in more detail herein. In the illustrative example, the racks are connected to multiple pod switches 350, 360. The pod switch 350 includes a set of ports 352 to which the sleds of the racks of the pod 210 are connected and another set of ports 354 that connect the pod 210 to the spine switches 250 to provide connectivity to other pods in the data center 200. Similarly, the pod switch 360 includes a set of ports 362 to which the sleds of the racks of the pod 210 are connected and a set of ports 364 that connect the pod 210 to the spine switches 250. As such, the use of the pair of switches 350, 360 provides an amount of redundancy to the pod 210. For example, if either of the switches 350, 360 fails, the sleds in the pod 210 may still maintain data communication with the remainder of the data center 200 (e.g., sleds of other pods) through the other switch 350, 360. Furthermore, in the illustrative example, the switches 250, 350, 360 may be implemented as dual-mode optical switches, capable of routing both Ethernet protocol communications carrying Internet Protocol (IP) packets and communications according to a second, high-performance link-layer protocol (e.g., Peripheral Component Interconnect (PCI) Express (PCIe)) via optical signaling media of an optical fabric.

It should be appreciated that any one of the other pods 220, 230, 240 (as well as any additional pods of the data center 200) may be similarly structured as, and have components similar to, the pod 210 shown in and disclosed in regard to FIG. 3 (e.g., a given pod may have rows of racks housing multiple sleds as described above). Additionally, while two pod switches 350, 360 are shown, it should be understood that in other examples, a different number of pod switches may be present, providing even more failover capacity. In other examples, pods may be arranged differently than the rows-of-racks configuration shown in FIGS. 2 and 3. For example, a pod may include multiple sets of racks arranged radially (e.g., the racks are equidistant from a center switch).

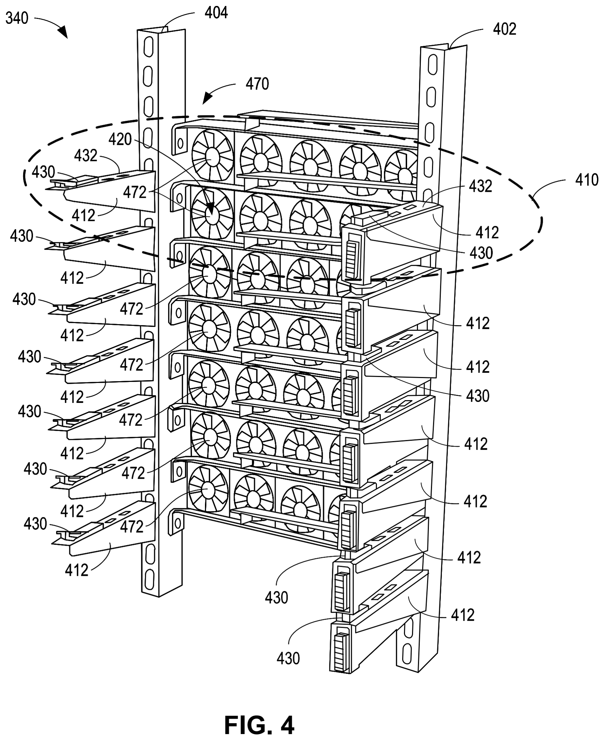

FIGS. 4-6 illustrate an example rack 340 of the data center 200. As shown in the illustrated example, the rack 340 includes two elongated support posts 402, 404, which are arranged vertically. For example, the elongated support posts 402, 404 may extend upwardly from a floor of the data center 200 when deployed. The rack 340 also includes one or more horizontal pairs 410 of elongated support arms 412 (identified in FIG. 4 via a dashed ellipse) configured to support a sled of the data center 200 as discussed below. One elongated support arm 412 of the pair of elongated support arms 412 extends outwardly from the elongated support post 402 and the other elongated support arm 412 extends outwardly from the elongated support post 404.

In the illustrative examples, at least some of the sleds of the data center 200 are chassis-less sleds. That is, such sleds have a chassis-less circuit board substrate on which physical resources (e.g., programmable circuitry, memory, accelerators, storage, etc.) are mounted as discussed in more detail below. As such, the rack 340 is configured to receive the chassis-less sleds. For example, a given pair 410 of the elongated support arms 412 defines a sled slot 420 of the rack 340, which is configured to receive a corresponding chassis-less sled. To do so, the elongated support arms 412 include corresponding circuit board guides 430 configured to receive the chassis-less circuit board substrate of the sled. The circuit board guides 430 are secured to, or otherwise mounted to, a top side 432 of the corresponding elongated support arms 412. For example, in the illustrative example, the circuit board guides 430 are mounted at a distal end of the corresponding elongated support arm 412 relative to the corresponding elongated support post 402, 404. For clarity of FIGS. 4-6, not every circuit board guide 430 may be referenced in each figure. In some examples, at least some of the sleds include a chassis and the racks 340 are suitably adapted to receive the chassis.

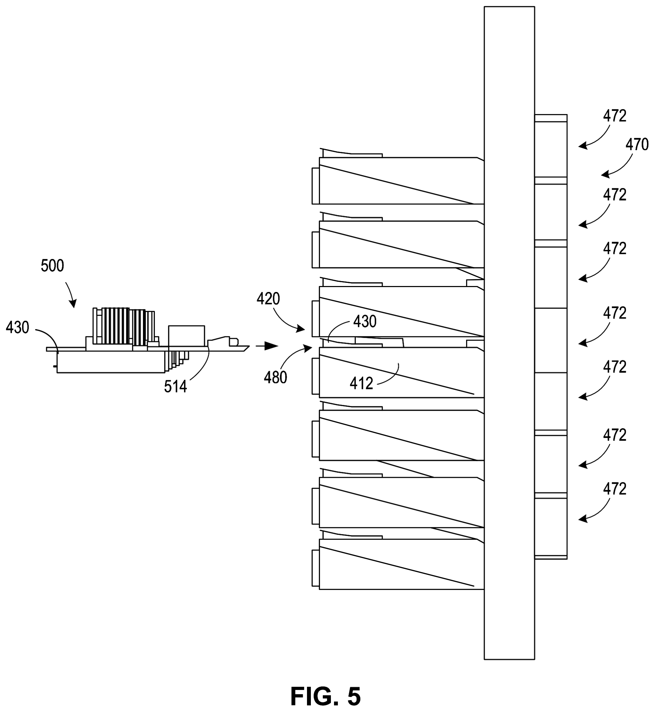

The circuit board guides 430 include an inner wall that defines a circuit board slot 480 configured to receive the chassis-less circuit board substrate of a sled 500 when the sled 500 is received in the corresponding sled slot 420 of the rack 340. To do so, as shown in FIG. 5, a user (or robot) aligns the chassis-less circuit board substrate of an illustrative chassis-less sled 500 to a sled slot 420. The user, or robot, may then slide the chassis-less circuit board substrate forward into the sled slot 420 such that each side edge 514 of the chassis-less circuit board substrate is received in a corresponding circuit board slot 480 of the circuit board guides 430 of the pair 410 of elongated support arms 412 that define the corresponding sled slot 420 as shown in FIG. 5. By having robotically accessible and robotically manipulable sleds including disaggregated resources, the different types of resource can be upgraded independently of one other and at their own optimized refresh rate. Furthermore, the sleds are configured to blindly mate with power and data communication cables in the rack 340, enhancing their ability to be quickly removed, upgraded, reinstalled, and/or replaced. As such, in some examples, the data center 200 may operate (e.g., execute workloads, undergo maintenance and/or upgrades, etc.) without human involvement on the data center floor. In other examples, a human may facilitate one or more maintenance or upgrade operations in the data center 200.

It should be appreciated that the circuit board guides 430 are dual sided. That is, a circuit board guide 430 includes an inner wall that defines a circuit board slot 480 on each side of the circuit board guide 430. In this way, the circuit board guide 430 can support a chassis-less circuit board substrate on either side. As such, a single additional elongated support post may be added to the rack 340 to turn the rack 340 into a two-rack solution that can hold twice as many sled slots 420 as shown in Fig. 4. The illustrative rack 340 includes seven pairs 410 of elongated support arms 412 that define seven corresponding sled slots 420. The sled slots 420 are configured to receive and support a corresponding sled 500 as discussed above. In other examples, the rack 340 may include additional or fewer pairs 410 of elongated support arms 412 (e.g., additional or fewer sled slots 420). It should be appreciated that because the sled 500 is chassis-less, the sled 500 may have an overall height that is different than typical servers. As such, in some examples, the height of a given sled slot 420 may be shorter than the height of a typical server (e.g., shorter than a single rank unit, referred to as "1U"). That is, the vertical distance between pairs 410 of elongated support arms 412 may be less than a standard rack unit "1U." Additionally, due to the relative decrease in height of the sled slots 420, the overall height of the rack 340 in some examples may be shorter than the height of traditional rack enclosures. For example, in some examples, the elongated support posts 402, 404 may have a length of six feet or less. Again, in other examples, the rack 340 may have different dimensions. For example, in some examples, the vertical distance between pairs 410 of elongated support arms 412 may be greater than a standard rack unit "1U". In such examples, the increased vertical distance between the sleds allows for larger heatsinks to be attached to the physical resources and for larger fans to be used (e.g., in the fan array 470 described below) for cooling the sleds, which in turn can allow the physical resources to operate at increased power levels. Further, it should be appreciated that the rack 340 does not include any walls, enclosures, or the like. Rather, the rack 340 is an enclosure-less rack that is opened to the local environment. In some cases, an end plate may be attached to one of the elongated support posts 402, 404 in those situations in which the rack 340 forms an end-of-row rack in the data center 200.

In some examples, various interconnects may be routed upwardly or downwardly through the elongated support posts 402, 404. To facilitate such routing, the elongated support posts 402, 404 include an inner wall that defines an inner chamber in which interconnects may be located. The interconnects routed through the elongated support posts 402, 404 may be implemented as any type of interconnects including, but not limited to, data or communication interconnects to provide communication connections to the sled slots 420, power interconnects to provide power to the sled slots 420, and/or other types of interconnects.

The rack 340, in the illustrative example, includes a support platform on which a corresponding optical data connector (not shown) is mounted. Such optical data connectors are associated with corresponding sled slots 420 and are configured to mate with optical data connectors of corresponding sleds 500 when the sleds 500 are received in the corresponding sled slots 420. In some examples, optical connections between components (e.g., sleds, racks, and switches) in the data center 200 are made with a blind mate optical connection. For example, a door on a given cable may prevent dust from contaminating the fiber inside the cable. In the process of connecting to a blind mate optical connector mechanism, the door is pushed open when the end of the cable approaches or enters the connector mechanism. Subsequently, the optical fiber inside the cable may enter a gel within the connector mechanism and the optical fiber of one cable comes into contact with the optical fiber of another cable within the gel inside the connector mechanism.

The illustrative rack 340 also includes a fan array 470 coupled to the cross-support arms of the rack 340. The fan array 470 includes one or more rows of cooling fans 472, which are aligned in a horizontal line between the elongated support posts 402, 404. In the illustrative example, the fan array 470 includes a row of cooling fans 472 for the different sled slots 420 of the rack 340. As discussed above, the sleds 500 do not include any on-board cooling system in the illustrative example and, as such, the fan array 470 provides cooling for such sleds 500 received in the rack 340. In other examples, some or all of the sleds 500 can include on-board cooling systems. Further, in some examples, the sleds 500 and/or the racks 340 may include and/or incorporate a liquid and/or immersion cooling system to facilitate cooling of electronic component(s) on the sleds 500. The rack 340, in the illustrative example, also includes different power supplies associated with different ones of the sled slots 420. A given power supply is secured to one of the elongated support arms 412 of the pair 410 of elongated support arms 412 that define the corresponding sled slot 420. For example, the rack 340 may include a power supply coupled or secured to individual ones of the elongated support arms 412 extending from the elongated support post 402. A given power supply includes a power connector configured to mate with a power connector of a sled 500 when the sled 500 is received in the corresponding sled slot 420. In the illustrative example, the sled 500 does not include any on-board power supply and, as such, the power supplies provided in the rack 340 supply power to corresponding sleds 500 when mounted to the rack 340. A given power supply is configured to satisfy the power requirements for its associated sled, which can differ from sled to sled. Additionally, the power supplies provided in the rack 340 can operate independent of each other. That is, within a single rack, a first power supply providing power to a compute sled can provide power levels that are different than power levels supplied by a second power supply providing power to an accelerator sled. The power supplies may be controllable at the sled level or rack level, and may be controlled locally by components on the associated sled or remotely, such as by another sled or an orchestrator.

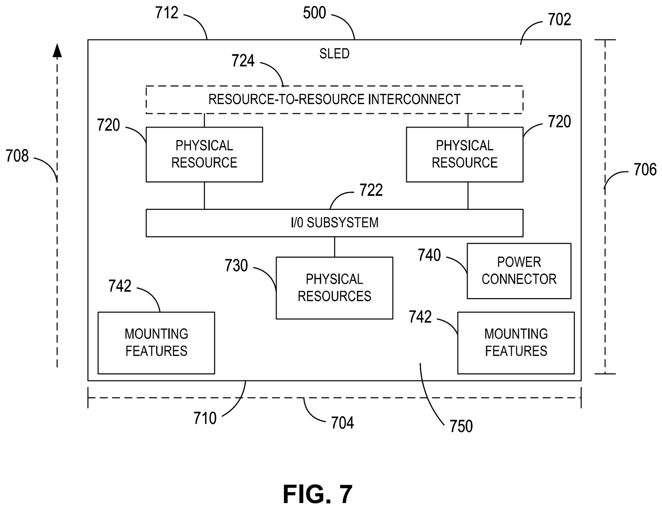

Referring now to FIG. 7, the sled 500, in the illustrative example, is configured to be mounted in a corresponding rack 340 of the data center 200 as discussed above. In some examples, a given sled 500 may be optimized or otherwise configured for performing particular tasks, such as compute tasks, acceleration tasks, data storage tasks, etc. For example, the sled 500 may be implemented as a compute sled, an accelerator, a storage sled, or as a sled optimized or otherwise configured to perform other specialized tasks, such as a memory sled.

As discussed above, the illustrative sled 500 includes a chassis-less circuit board substrate 702, which supports various physical resources (e.g., electrical components) mounted thereon. It should be appreciated that the circuit board substrate 702 is "chassis-less" in that the sled 500 does not include a housing or enclosure. Rather, the chassis-less circuit board substrate 702 is open to the local environment. The chassis-less circuit board substrate 702 may be formed from any material capable of supporting the various electrical components mounted thereon. For example, in an illustrative example, the chassis-less circuit board substrate 702 is formed from an FR-4 glass-reinforced epoxy laminate material. Other materials may be used to form the chassis-less circuit board substrate 702 in other examples.

As discussed in more detail below, the chassis-less circuit board substrate 702 includes multiple features that improve the thermal cooling characteristics of the various electrical components mounted on the chassis-less circuit board substrate 702. As discussed, the chassis-less circuit board substrate 702 does not include a housing or enclosure, which may improve the airflow over the electrical components of the sled 500 by reducing those structures that may inhibit air flow. For example, because the chassis-less circuit board substrate 702 is not positioned in an individual housing or enclosure, there is no vertically-arranged backplane (e.g., a back plate of the chassis) attached to the chassis-less circuit board substrate 702, which could inhibit air flow across the electrical components. Additionally, the chassis-less circuit board substrate 702 has a geometric shape configured to reduce the length of the airflow path across the electrical components mounted to the chassis-less circuit board substrate 702. For example, the illustrative chassis-less circuit board substrate 702 has a width 704 that is greater than a depth 706 of the chassis-less circuit board substrate 702. In one particular example, the chassis-less circuit board substrate 702 has a width of about 21 inches and a depth of about 9 inches, compared to a typical server that has a width of about 17 inches and a depth of about 39 inches. As such, an airflow path 708 that extends from a front edge 710 of the chassis-less circuit board substrate 702 toward a rear edge 712 has a shorter distance relative to typical servers, which may improve the thermal cooling characteristics of the sled 500. Furthermore, although not illustrated in FIG. 7, the various physical resources mounted to the chassis-less circuit board substrate 702 in this example are mounted in corresponding locations such that no two substantively heat-producing electrical components shadow each other as discussed in more detail below. That is, no two electrical components, which produce appreciable heat during operation (e.g., greater than a nominal heat sufficient enough to adversely impact the cooling of another electrical component), are mounted to the chassis-less circuit board substrate 702 linearly in-line with each other along the direction of the airflow path 708 (e.g., along a direction extending from the front edge 710 toward the rear edge 712 of the chassis-less circuit board substrate 702). The placement and/or structure of the features may be suitable adapted when the electrical component(s) are being cooled via liquid (e.g., one phase or two-phase cooling).

As discussed above, the illustrative sled 500 includes one or more physical resources 720 mounted to a top side 750 of the chassis-less circuit board substrate 702. Although two physical resources 720 are shown in FIG. 7, it should be appreciated that the sled 500 may include one, two, or more physical resources 720 in other examples. The physical resources 720 may be implemented as any type of programmable circuitry, controller, or other compute circuit capable of performing various tasks such as compute functions and/or controlling the functions of the sled 500 depending on, for example, the type or intended functionality of the sled 500. For example, as discussed in more detail below, the physical resources 720 may be implemented as high-performance processor circuitry in examples in which the sled 500 is implemented as a compute sled, as accelerator coprocessor circuitry or circuits in examples in which the sled 500 is implemented as an accelerator sled, storage controllers in examples in which the sled 500 is implemented as a storage sled, or a set of memory devices in examples in which the sled 500 is implemented as a memory sled.

The sled 500 also includes one or more additional physical resources 730 mounted to the top side 750 of the chassis-less circuit board substrate 702. In the illustrative example, the additional physical resources include a network interface controller (NIC) as discussed in more detail below. Depending on the type and functionality of the sled 500, the physical resources 730 may include additional or other electrical components, circuits, and/or devices in other examples.

The physical resources 720 are communicatively coupled to the physical resources 730 via an input/output (I/O) subsystem 722. The I/O subsystem 722 may be implemented as circuitry and/or components to facilitate input/output operations with the physical resources 720, the physical resources 730, and/or other components of the sled 500. For example, the I/O subsystem 722 may be implemented as, or otherwise include, memory controller hubs, input/output control hubs, integrated sensor hubs, firmware devices, communication links (e.g., point-to-point links, bus links, wires, cables, waveguides, light guides, printed circuit board traces, etc.), and/or other components and subsystems to facilitate the input/output operations. In the illustrative example, the I/O subsystem 722 is implemented as, or otherwise includes, a double data rate (DDR) data bus such as a DDR4 data bus or a DDR5 data bus.

In some examples, the sled 500 may also include a resource-to-resource interconnect 724. The resource-to-resource interconnect 724 may be implemented as any type of communication interconnect capable of facilitating resource-to-resource communications. In the illustrative example, the resource-to-resource interconnect 724 is implemented as a high-speed point-to-point interconnect (e.g., faster than the I/O subsystem 722). For example, the resource-to-resource interconnect 724 may be implemented as a QuickPath Interconnect (QPI), an UltraPath Interconnect (UPI), or other high-speed point-to-point interconnect dedicated to resource-to-resource communications.

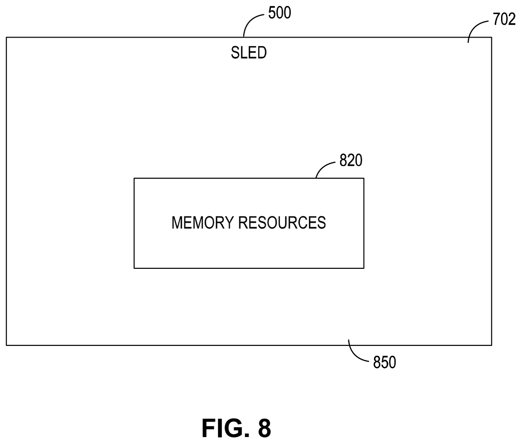

The sled 500 also includes a power connector 740 configured to mate with a corresponding power connector of the rack 340 when the sled 500 is mounted in the corresponding rack 340. The sled 500 receives power from a power supply of the rack 340 via the power connector 740 to supply power to the various electrical components of the sled 500. That is, the sled 500 does not include any local power supply (e.g., an on-board power supply) to provide power to the electrical components of the sled 500. The exclusion of a local or on-board power supply facilitates the reduction in the overall footprint of the chassis-less circuit board substrate 702, which may increase the thermal cooling characteristics of the various electrical components mounted on the chassis-less circuit board substrate 702 as discussed above. In some examples, voltage regulators are placed on a bottom side 850 (see FIG. 8) of the chassis-less circuit board substrate 702 directly opposite of programmable circuitry, and power is routed from the voltage regulators to the programmable circuitry by vias extending through the circuit board substrate 702. Such a configuration provides an increased thermal budget, additional current and/or voltage, and better voltage control relative to typical printed circuit boards in which processor power is delivered from a voltage regulator, in part, by printed circuit traces.

In some examples, the sled 500 may also include mounting features 742 configured to mate with a mounting arm, or other structure, of a robot to facilitate the placement of the sled 500 in a rack 340 by the robot. The mounting features 742 may be implemented as any type of physical structures that allow the robot to grasp the sled 500 without damaging the chassis-less circuit board substrate 702 or the electrical components mounted thereto. For example, in some examples, the mounting features 742 may be implemented as non-conductive pads attached to the chassis-less circuit board substrate 702. In other examples, the mounting features may be implemented as brackets, braces, or other similar structures attached to the chassis-less circuit board substrate 702. The particular number, shape, size, and/or make-up of the mounting feature 742 may depend on the design of the robot configured to manage the sled 500.

Referring now to FIG. 8, in addition to the physical resources 730 mounted on the top side 750 of the chassis-less circuit board substrate 702, the sled 500 also includes one or more memory devices 820 mounted to a bottom side 850 of the chassis-less circuit board substrate 702. That is, the chassis-less circuit board substrate 702 is implemented as a double-sided circuit board. The physical resources 720 are communicatively coupled to the memory devices 820 via the I/O subsystem 722. For example, the physical resources 720 and the memory devices 820 may be communicatively coupled by one or more vias extending through the chassis-less circuit board substrate 702. Different ones of the physical resources 720 may be communicatively coupled to different sets of one or more memory devices 820 in some examples. Alternatively, in other examples, different ones of the physical resources 720 may be communicatively coupled to the same ones of the memory devices 820.

The memory devices 820 may be implemented as any type of memory device capable of storing data for the physical resources 720 during operation of the sled 500, such as any type of volatile (e.g., dynamic random access memory (DRAM), etc.) or non-volatile memory. Volatile memory may be a storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular examples, DRAM of a memory component may comply with a standard promulgated by the Joint Electron Device Engineering Council (JEDEC) referred to as JESD, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces.

In one example, the memory device is a block addressable memory device, such as those based on NOT AND (NAND) or NOT OR (NOR) technologies. A memory device may also include next-generation nonvolatile devices, such as Intel 3D XPoint^{™} memory or other byte addressable write-in-place nonvolatile memory devices. In one example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, or a combination of any of the above, or other memory. The memory device may refer to the die itself and/or to a packaged memory product. In some examples, the memory device may include a transistor-less stackable cross point architecture in which memory cells sit at the intersection of word lines and bit lines and are individually addressable and in which bit storage is based on a change in bulk resistance.

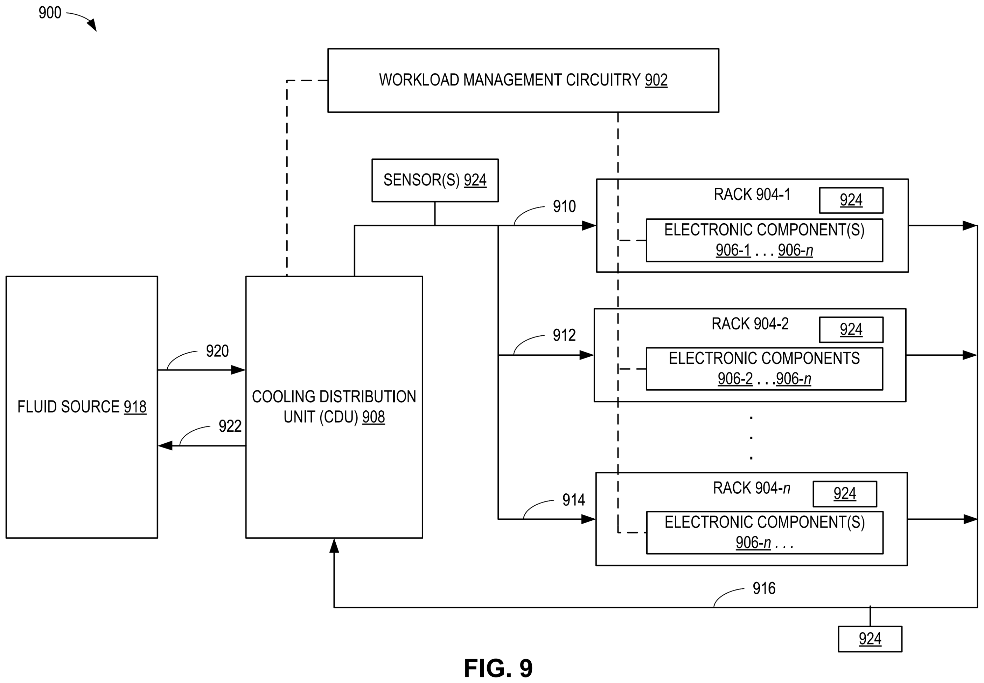

FIG. 9 illustrates an example environment 900 in which example workload management circuitry 902 operates to facilitate energy reclamation from electronic component(s) carried by rack(s). The environment 900 can be, for example, a data center. In the example of FIG. 9, each of a plurality of racks 904-1, 904-2, 904-n carries electronic component(s) such as server(s), graphic processing unit(s) (GPU(s)), central processing unit(s) (CPU(s)), neural processing unit(s) (NPU(s)), memor(ies), etc. For example, a first rack 904-1 carries an electronic component 906-1 and can carry one or more other electronic components 906-*n.* Similarly, the second rack 904-2 carries an electronic component 906-2 and can carry one or more other electronic components 906-n. Another rack 904-n carries one or more electronic components 906-n. For ease of readability, the racks 904-1, 904-2, *904-n* of FIG. 9 will henceforth collectively and individually be referred to as the rack(s) 904. Also, for ease of readability, the electronic components 906-1, 906-2, 906-n of FIG. 9 will henceforth collectively and individually be referred to as the electronic component(s) 906.

In the example of FIG. 9, a cooling distribution unit (CDU) 908 provides a liquid coolant to the respective racks 904 via corresponding first flow paths 910, 912, 914. The liquid coolant flows past the electronic components 906 in the respective racks 904 via the first flow paths 910, 912, 914. As the liquid coolant flows past the electronic components 906, heat output by the electronic components 906 during operation of the electronic components 906 is transferred to the liquid coolant. The heated liquid coolant exits the racks 904 and flows back to the CDU 908 via a second flow path 916. At the CDU 908, the heat is transferred from the heated coolant to a second fluid flowing through the CDU 908. After the heat exchange at the CDU 908, the coolant is re-circulated for cooling the electronic components 906 via the first flow paths 910, 912, 914.

The second fluid to which the heat is transferred from the heated coolant at the CDU 908 can be provided to the CDU 908 by a fluid source 918 in an environment that includes the data center, as represented by arrow 920 in FIG. 9. The fluid source 918 can be, for example, facility water system, a cooling tower, etc. The heated second fluid (i.e., the fluid that absorbed the heat from the coolant after the coolant was exposed to the electronic components 906) can be returned to the fluid source 918, as represented by arrow 922 in FIG. 9. The heated second fluid can be used to heat, for example, a building in which the data center is located.

In the example of FIG. 9, sensor(s) 924 can generate outputs representing conditions in the data center 900. For example, the sensor(s) 924 can generate outputs indicative of a temperature of the inlet coolant flowing through the first flow paths 910, 912, 914 and the temperature of the outlet coolant flowing though the second flow path 916. The sensor(s) 924 can generate outputs indicative of temperature(s) associated with the electronic components 906 (e.g., heat generated by the electronic components). The sensor(s) 924 proximate to (e.g., inside, on) the electronic component(s) 906, on the rack(s) 904, etc.

In the example of FIG. 9, the workload management circuitry 902 assigns workload(s) and/or job(s) to the electronic components 906 of one or more of the racks 904 to increase and/or concentrate an amount of heat generated at the selected rack(s) 904. The concentration of heat at the selected rack(s) 904 increases (e.g., maximizes) the amount of heat that is reclaimed from the electronic component(s) 906 of the selected rack(s) 904 via the coolant. The workload management circuitry 902 dynamically selects the rack(s) 904 at which the higher heat loads are to be generated by adjusting the assignment of workload(s) to the electronic components 906 at the respective racks 904. When assigning the workloads, the workload management circuitry 902 considers factors such as age of the electronic components 906; maintenance schedules for the electronic components 906; thermal design power (TDP) of the electronic components 906; inlet and exit temperature of the coolant passing through the racks 904 via the first flow paths 910, 910, 914 and the second or return flow path 916.

Based on the workload(s) and the additional factor(s) (e.g., age, maintenance schedule(s)), the workload management circuitry 902 identifies one or more racks 904 to serve as a harvesting rack; that is, a rack at which heat generation is to be concentrated via assignment of workloads to enable an increased amount (e.g., a maximum amount) of heat to be reclaimed from that rack as compared to other racks. For example, rather than distributing two workloads between a first electronic component 906 (e.g., the electronic component 906-1) of a first rack (e.g., the rack 904-1) and a second electronic component 906 (e.g., the electronic component 906-2) of a second rack (e.g., the rack 904-2), the workload management circuitry 902 can assign both workloads to be performed by the electronic component(s) 906 of the first rack 904. Thus, the workload management circuitry 902 cause heat generation to be concentrated at the first rack 904 because of the increased amount of work performed by the electronic component(s) 906 of the first rack 904 as compared to, for example, the second rack 904. The increased amount of heat generated at the first rack 904 due to the concentration of workloads at the first rack 904 can then be harvested for energy.

When the coolant passes through, for example, the first rack 904 selected by the workload management circuitry 902 for harvesting, an increased amount of heat is transferred to the coolant due to the increased amount of heat generated by the electronic component(s) 906 at the first rack 904 as compared to other racks 904. Therefore, the heat exchange occurring at the CDU 908 provides for an increased amount of heat to be transferred to the second fluid as compared to if performance of the workloads was not concentrated at the first rack 904. The heated second fluid that is then returned to the fluid source 918 can be used for other purposes, such as heating the building.

In some examples, the workload management circuitry 902 controls the temperature of the coolant flowing to the first rack 904 selected for harvesting to increase a temperature differential between the inlet coolant and the outlet coolant. For example, the workload management circuitry 902 can cause the temperature of the inlet coolant flowing to the first rack 904 to be adjusted (e.g., decreased) to increase a capacity of the coolant to absorb heat output by the electronic component(s) 906 of the first rack 904, thereby increasing the amount of heat reclaimed through the heat exchange at the CDU 908. The workload management circuitry 902 can consider temperature data for the electronic component(s) 906 at the other rack(s) 904, 904 when determining the coolant temperature to maintain cooling at the other racks as well.

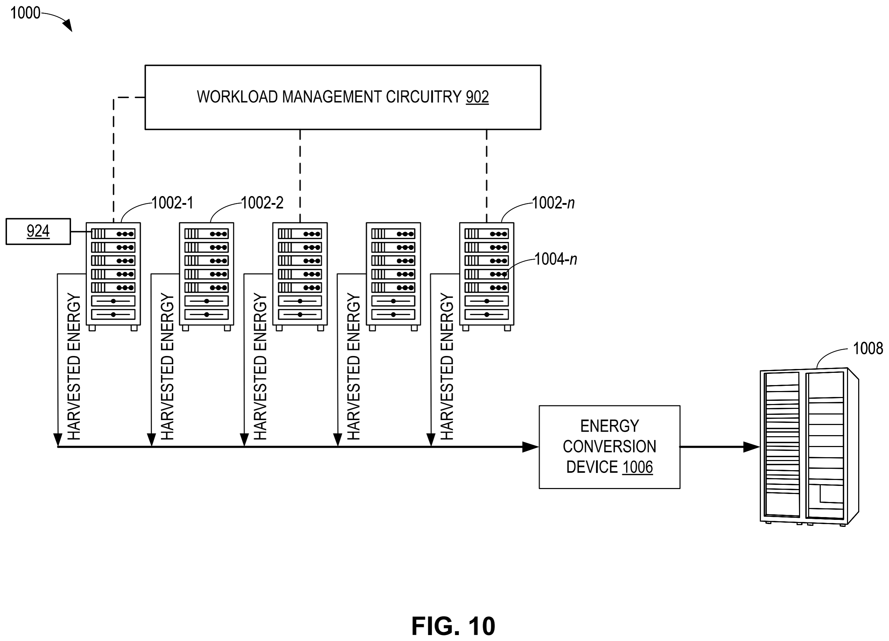

FIG. 10 is another example environment 1000 in which the workload management circuitry 902 operates to facilitate energy harvesting via targeted heat generation through workload scheduling. The example environment 1000 of FIG. 10 can be a data center. In the example of FIG. 10, rather than spreading workloads between the electronic component(s) of the respective racks in the data center to avoid, for example, creating hot spots or areas of increased temperature at the racks, the workload management circuitry 902 assigns the workloads to increase (e.g., maximize) heat generated by certain ones of the electronic component(s) by concentrating workload assignments. In the example of FIG. 10, the harvested energy can be used to generate electronical power via thermoelectric generator(s).

The example environment of FIG. 10 includes a plurality of racks 1002-1, 1002-2, 1002-n. Each of the racks 1002-1, 1002-2, 1002-n carries electronic component(s) *1004-n* (e.g., server(s), GPU(s), etc.). For ease of readability, the racks 1002-1, 1002-2, *1002-n* of FIG. 10 will henceforth collectively and individually be referred to as the rack(s) 1002. Also, for ease of readability, the electronic components 1004-n of FIG. 10 will henceforth collectively and individually be referred to as the electronic component(s) 1004. In the example of FIG. 10, sensor(s) 924 can generate outputs indicative of temperatures associated with the electronic component(s) 1004 (e.g., heat generated by the electronic component(s) 1004).

For example, the workload management circuitry 902 receives temperature data associated with the electronic components 1004. Typically, when assigning jobs to the electronic components 1004, a workload scheduling algorithm avoids assigning jobs to the electronic component(s) 1004 that are associated with higher temperature(s) to avoid creating hot spots. In the example of FIG. 10, the workload management circuitry 902 transforms the temperatures of the electronic components 1004 that are provided to a workload scheduling algorithm (which may be provided by a third party). Based on the transformed temperature data, the workload scheduling algorithm assigns jobs to electronic components 1004 that might not otherwise receive such jobs because the non-transformed temperature data indicates that assigning jobs to those electronic components 1004 could create hot spots. However, due to the temperature transform, the workload scheduling algorithm assigns jobs (e.g., additional jobs) to those electronic components 1004 that are already generating more heat than other electronic components 1004, thereby increasing (e.g., further increasing, maximizing) the amount of heat generated by those electronic components 1004.

The additional amount of heat generated by the electronic components 1004 that have been assigned job(s) can increase a thermal gradient at a thermoelectric generator (TEG) associated with the electronic component(s) 1004. By amplifying the temperature difference between the heat-generating electronic component(s) 1004 and a cooling medium (e.g., air, liquid), the workload management circuitry 902 increases energy harvested from the rack(s) 1002. In the example of FIG. 10, the harvested heat energy can be converted to electrical energy via an energy conversion device 1006. The electrical energy can be used to, for example, provide power to a building and/or be stored in a battery of an uninterruptible power supply (UPS) 1008 for back-up purposes.

When assigning the workloads, the workload management circuitry 902 can consider factors such as whether a workload is migratable and, thus could be transferred to an electronic component 1004 to concentrate workload(s) at that electronic component 1004; the amount of resources the workload(s) will consume; capacity of the electronic component 1004 to perform the workload(s) without introducing operational instabilities, etc. In some examples, after transferring or assigning workload(s) to particular electronic component(s) 1004 for harvesting purposes, the workload management circuitry 902 may cause other electronic component(s) 1004 from which, for example, the workload(s) have been transferred into lower power states to conserve energy, reducing cooling needs at those electronic component(s) 1004, etc.

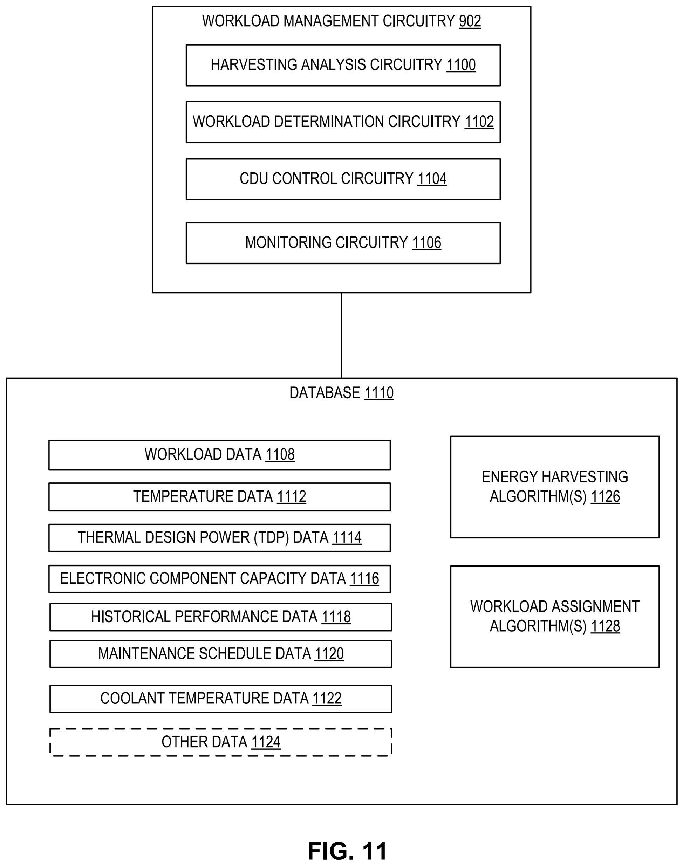

FIG. 11 is a block diagram of an example implementation of the workload management circuitry 902 of FIGS. 9 and 10 to facilitate energy harvesting via assignment of workload(s) to electronic component(s). The workload management circuitry 902 of FIG. 11 may be instantiated (e.g., creating an instance of, bring into being for any length of time, materialize, implement, etc.) by programmable circuitry such as a Central Processor Unit (CPU) executing first instructions. Additionally or alternatively, the workload management circuitry 902 of FIG. 11 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 11 may, thus, be instantiated at the same or different times. Some or all of the circuitry of FIG. 11 may be instantiated, for example, in one or more threads executing concurrently on hardware and/or in series on hardware. Moreover, in some examples, some or all of the circuitry of FIG. 11 may be implemented by microprocessor circuitry executing instructions and/or FPGA circuitry performing operations to implement one or more virtual machines and/or containers.

The example workload management circuitry 902 of FIG. 11 includes harvesting analysis circuitry 1100, workload determination circuitry 1102, CDU control circuitry 1104, and monitoring circuitry 1106. In some examples, the harvesting analysis circuitry 1100 is instantiated by programmable circuitry executing harvesting analysis instructions and/or configured to perform operations such as those represented by the flowchart(s) of FIGS. 12A-12C, 13, 14, 15A-15C, 17, 18, and 19. In some examples, the workload determination circuitry 1102 is instantiated by programmable circuitry executing workload determination instructions and/or configured to perform operations such as those represented by the flowchart(s) of FIGS. 12A-12C, 15A-15C, 17, 18, and 19. In some examples, the CDU control circuitry 1104 is instantiated by programmable circuitry executing CDU control instructions and/or configured to perform operations such as those represented by the flowchart(s) of FIGS. 12A-12C, 14, and 15A-15C. In some examples, the monitoring circuitry 1106 is instantiated by programmable circuitry executing monitoring instructions and/or configured to perform operations such as those represented by the flowchart(s) of FIGS. 12A-12C, 15A-15C, and 19.

In the example of FIG. 11, workloads to be performed by electronic component(s) 906, 1004 of the rack(s) 904, 1002 can be stored in a database 1110 as workload data 1108. In some examples, the database 1110 is located external to the workload management circuitry 902 in a location accessible to the workload management circuitry 902, as shown in FIG. 11. In some examples, the workload management circuitry 902 includes the database 1110.

The workload data 1108 can include workload(s) that have not yet been assigned and/or workload(s) that have been assigned to be performed by the electronic component(s) 906, 1004. The workload data 1108 can include an estimate of an amount of processing resource(s) a workload will consume and whether the workload is migratable or transferrable between electronic components 906, 1004 (e.g., transferrable between different servers located at different racks). The workload data 1108 can indicate a priority of the workload(s) or job(s) to be performed.

In the example of FIG. 11, the database 1110 can store other inputs for use by the workload management circuitry 902 in distributing workloads for harvesting purposes. The inputs can be provided by, for example, sensor(s) 924 in the environment 900, 1000, user input(s), etc. For example, the database 1110 can stored temperature data 1112 indicative of temperature(s) associated with the electronic component(s) 906, 1004 and measured by, for example, the sensor(s) 924. The temperature data 1112 can represent heat generated by the electronic component(s) 906, 1004 during operation. Also, information such as thermal design power (TDP) data 1114 for the electronic component(s) 906, 1004 can be stored in the database 1110 based on, for example, user input(s).

The database 1110 can store electronic component capacity data 1116 indicative of an available capacity of the respective electronic component(s) 906, 1004 of the rack(s) 904, 1002 to perform workloads at a given time. The electronic component capacity data 1116 can be based on, for example, a total workload capacity of an electronic component 906, 1004 (e.g., server workload capacity) and workloads previously assigned that are being performed and/or expected (e.g., scheduled) to be performed within a time period (e.g., within the next hour, within the next six hours, within the next day) by the electronic component 906, 1004. The electronic component capacity data 1116 can be updated in response to assignment of workload(s) to the electronic component(s) 906, 1004 and/or completion of workload(s) by the electronic component(s) 906, 1004. The electronic component capacity data 1116 can also indicate if the electronic component(s) 906, 1004 is performing tasks that are non-transferable, tasks that are considered high priority or operationally critical, etc. Thus, the electronic component capacity data 1116 provides an indication of utilization of the respective electronic component 906, 1004.

The example database 1110 of FIG. 11 can store historical performance data 1118 for the respective electronic component(s) 906, 1004 based on the workloads completed by the electronic component(s) 906, 1004. The historical performance data 1118 can include, for example, an amount of time for the electronic component 906, 1004 to complete a job, a temperature of the electronic component 906, 1004 when performing the workload, other workload(s) that were performed by the electronic component 906, 1004 at the same time or within a threshold time period, whether there were operational issues associated with performance of the workload by the electronic component 906, 1004, etc. In some examples, the historical performance data 1118 includes the ages of the respective electronic components 906, 1004.

In the example of FIG. 11, the database 1110 can store maintenance schedule data 1120 identifying the electronic component(s) 906, 1004 that are to undergo maintenance and the timing of the performance of such maintenance. The maintenance schedule data 1120 can be based on, for example, user input(s) defining periodic maintenance schedules for the electronic component(s) 906, 1004. In some examples, the maintenance schedule data 1120 includes predictive maintenance data.

In examples in which the electronic components are cooled via circulation of a liquid coolant as disclosed in connection with FIG. 9, the database 1110 of FIG. 11 stores coolant temperature data 1122. The coolant temperature data 1122 can include temperature data for the liquid coolant flowing through the first flow paths 910, 912, 914 from the CDU prior to delivery to the racks 904 (i.e., coolant input temperature) and temperature data for the liquid coolant flowing through the second flow path 916 after the coolant absorbs heat output by the electronic component 906, 1004 (i.e., coolant output temperature). The coolant temperature data 1122 can be based on output(s) of the sensor(s) 924 located along the flow paths 910, 912, 914, 916. In some examples, the coolant temperature data 1122 includes threshold (e.g., maximum) coolant outlet temperature that, when satisfied, serves as an indication that the electronic component(s) 906, 1004 are overheating.

The example database 1110 can store other types of data 1124, such as energy demand data for the recipients of the harvested energy (e.g., building heating demands). In some examples, the other data 1124 can include energy pricing data. In some examples, the other data 1124 can include service level agreement (SLA) data associated with performance of the workloads.

The harvesting analysis circuitry 1100 of the example workload management circuitry 902 of FIG. 11 uses the workload data 1108 and one or more other input(s) stored in the database 1110 (e.g., the temperature data 1112, the TDP data 1114, the electronic component capacity data 1116, the historical performance data 118, the maintenance schedule data 1120, etc.) to assign workload(s) to the electronic component(s) 906, 1004 of a particular rack 904, 1002 to concentrate heat generation at the rack 904, 1002 for energy harvesting. For example, the harvesting analysis circuitry 1100 can execute one or more energy harvesting algorithm(s) 1126 to select a rack 904, 1002 having electronic component(s) 906, 1004 to which the workload(s) and/or job(s) should be assigned to increase (e.g., maximize) heat output at the rack 904, 1002. The energy harvesting algorithm(s) 1126 can be stored in the database 1110.

The energy harvesting algorithm(s) 1126 can include one more artificial intelligence (AI) algorithms that use, for example, machine learning to identify one or more racks 904, 1002 for energy harvesting via concentration of workload(s) at those rack(s) 904, 1002. For example, the energy harvesting algorithm(s) 1126 can identify the electronic component(s) 906, 1004 of particular rack(s) 904, 1002 that will increase heat output at the rack(s) 904, 1002 via transfer of assignment workload(s) and/or job(s) to the electronic component(s) 906, 1004. The energy harvesting algorithm(s) 1126 predict energy harvesting potentials for the electronic components 906, 1004 and, thus, the rack(s) 904, 1002 based on factors such as the workload data 1108, the temperature data 1112, the thermal design power data 1114, the electronic component capacity data 1116, the historical performance data 1118, and/or the maintenance schedule data 1120.

In some examples, the energy harvesting algorithm(s) 1126 evaluate whether the electronic component(s) 904, 1002 of a rack 904, 1002 can handle additional workload(s) without risking overheating and/or causing performance issues. For example, the energy harvesting algorithm(s) 1126 can evaluate the risk of performance issues based on the historical performance data 1118, can evaluate how the electronic component(s) 904, 1002 performed under similar conditions in the past, etc. In some examples, the energy harvesting algorithm(s) 1126 use predictive analytics to forecast potential failures at electronic component(s) 906, 1004 based on the historical performance data 1118 and current stress levels. In some examples, the energy harvesting algorithm(s) 1126 consider whether there are redundant systems in place to take over should the electronic component(s) 904, 1002 of the selected rack 904, 1002 experience any issues due to the increased workload. In some examples, the energy harvesting algorithm(s) 1126 consider whether the rack(s) 904, 1002 include other components (e.g., power supplies, cooling fans) that can help the electronic component(s) 904, 1002 sustain high thermal loads. In some examples, the energy harvesting algorithm(s) 1126 weighs the potential energy harvested against the risk of overheating and/or causing failures at the electronic component(s) 906, 1004. Thus, the energy harvesting algorithm(s) 1126 balance energy efficiency with the reliability of the data center operations when evaluating harvesting potentials.

In some examples, the energy harvesting algorithm(s) 1126 consider the effects of dynamic adjustments to workload assignments across electronic component(s) 906, 1004 of different racks 904, 1002 in assessing opportunities to increase energy harvesting potential at the rack(s) 904, 1002. In some examples, the energy harvesting algorithm(s) 1126 consider the types of workloads to be assigned based on the workload data 1108. Because some workload types may generate heat that is more suitable for energy harvesting (e.g., consistent high temperatures rather than fluctuating temperatures), energy harvesting algorithm(s) 1126 may prioritize assignment of workload(s) associated with more stable heat output. In some examples, the energy harvesting algorithm(s) 1126 analyze the historical performance data 1118 to predict which racks 904, 1002 are likely to be associated with the most consistent and usable heat output.

In some examples, the energy harvesting algorithm(s) 1126 attempt to avoid selecting rack(s) 904, 1002 that include electronic component(s) 906, 1004 that scheduled for maintenance as indicated by the maintenance schedule data 1120. Because downtime for maintenance can interfere with ability of the electronic component(s) 906, 1004 to sustain high workloads for energy harvesting, the energy harvesting algorithm(s) 1126 may avoid selecting rack(s) scheduled for maintenance. Additionally, the energy harvesting algorithm(s) 1126 can determine, based on the workload data 1108, whether any electronic component(s) 906, 1004 are running critical or high priority applications and avoid selecting rack(s) 904, 1002 with those electronic component(s) 906, 1004 to minimize risk of disruptions.

In some examples, the energy harvesting algorithm(s) 1126 can use the coolant temperature data 1122 to estimate a temperature differential between coolant following into and out of the rack(s) 904, 1002 and therefore indicate heat output. The coolant outlet temperature is the temperature of the coolant exiting the rack(s) 904, 1002 after absorbing heat from the electronic component(s) 906, 1004 and thus, indicates how much heat is being dissipated at the rack(s) 904, 1002. Thus, the more power consumed by the electronic component(s) 906, 1004, the higher the coolant outlet temperature because more heat is being generated and transferred to the coolant. In some examples, the energy harvesting algorithm(s) 1126 consider the cooling efficiency of each rack 904, 1002, which is a function of the coolant's heat capacity, flow rate, and the efficiency of the heat exchanges at the CDU 908. For example, the racks 904, 1002 with a more efficient heat exchange process can potentially generate more energy when their heat is harvested. Also, the racks 904, 1002 with higher coolant flow rates may offer better heat transfer and, thus, be more efficient for energy harvesting. Thus, in some examples, the energy harvesting algorithm(s) 1126 consider racks 904, 1002 with higher coolant flow rates to maximize the temperature differentials between the inlet flow paths 910, 912, 914 and the outlet flow path 916.

The energy harvesting algorithm(s) 1126 can consider other factors when determining the heat reclamation potentials and selecting rack(s) 904, 1002 for energy harvesting. For example, the energy harvesting algorithm(s) 1126 may prioritize racks 904, 1002 that are physically closer to heat recovery systems (e.g., heat exchangers) to reduce energy losses during the transfer process and improving the overall efficiency of energy harvesting.

In some examples, the energy harvesting algorithm(s) 1126 consider the effects of the external environment of the data center 900, 1000 (e.g., ambient temperature, humidity, etc.) with respect to cooling efficiency. For example, racks in locations with lower ambient temperatures may be less efficient for heat reclamation but could be ideal for sustained high workloads without overheating. The energy harvesting algorithm(s) 1126 can also consider time-of-day and seasonal variations in energy demand and cooling efficiency. For example, during cooler times of the day, it may be more efficient to harvest energy from a different rack(s) 904, 1002 than during warmer times of the day. The energy harvesting algorithm(s) 1126 can weigh such factors when assessing the energy reclamation potential.

In examples in which operation of the data center 900, 1000 is based on sustainability goals, the energy harvesting algorithm(s) 1126 could prioritize the rack(s) 904, 1002 that contribute to a lower carbon footprint, even if those rack(s) 904, 1002 have a lower energy harvesting potential. The energy harvesting algorithm(s) 1126 could also consider forecasted energy demand and select rack(s) 904, 1002 that can meet short-term energy harvesting needs while maintaining long-term stability of the electronic component(s) 906, 1004. When selecting harvesting rack(s) 904, 1002, the energy harvesting algorithm(s) 1126 can consider whether any energy harvesting efforts comply with local regulations regarding energy efficiency, waste heat recovery, and environmental impact.

The energy harvesting algorithm(s) 1126 output a ranking of rack(s) 904, 1002 by predicted energy harvesting potential. The harvesting analysis circuitry 1100 uses the ranking to select the harvesting rack(s) 904, 1002. In selecting the harvesting rack(s) 904, 1002, the harvesting analysis circuitry 1100 accounts factors such as the maintenance schedule data 1120 and performance of, for example, critical and/or non-transferable tasks by the electronic component(s) 906, 1004 at the racks 904, 1002 in the data center. As a result of execution of the energy harvesting algorithm(s) 1126, the harvesting analysis circuitry 1100 selects one or more racks 904, 1002 having electronic components 906, 1004 that can sustain increased thermal loads for energy harvesting purposes. As disclosed herein, based on the identification of the harvesting rack(s) 904, 1002 by the harvesting analysis circuitry 1100, the workload determination circuitry 1102 can cause new workload(s) to be assigned and/or previously assigned workloads to be transferred to the electronic component(s) 906, 1004 of the selected harvesting rack(s) 904, 1002.

As a result of execution of the energy harvesting algorithm(s) 1126, the harvesting analysis circuitry 1100 determines (e.g., predicts, estimates) an energy harvesting potential of the electronic component(s) 906, 1004 of the respective racks 904, 1002. For example, the harvesting analysis circuitry 1100 generates (e.g., estimates, predicts), via execution of the energy harvesting algorithm(s) 1126, power consumption values for the electronic component(s) 906, 1004 (e.g., each server, each GPU) of the racks 904, 1002. The energy harvesting algorithm(s) 1126 can estimate the power consumption values based on, for example, the workload data 1108, the temperature data 1112 for the electronic components 906, 1004, and the TDP data 1114 for the electronic components 906, 1004. Also, in the example of FIG. 11, the energy harvesting algorithm(s) 1126 assign an estimated remaining operating life to the electronic component(s) 906, 1004, which represents an estimated number of years of remaining service of the electronic component 906, 1004 based on, for example, thermal and power fatigue.

The example energy harvesting algorithm(s) 1126 use the power consumption values and the estimated remaining life for respective the electronic component(s) 906, 1004 generate a ranking of the racks 904, 1002 with respect to energy harvesting potential. For example, based on the power consumption values for the respective electronic component(s) 906, 1004 at each rack 904, 1002, the energy harvesting algorithm(s) 1126 generate a total power consumption value for each rack 904, 1002. The example energy harvesting algorithm(s) 1126 generate a selection score for each rack 904, 1002 based on the total power consumption (and, thus, heat output) and remaining operating life for the electronic component(s) 906, 1004 of the corresponding racks 904, 1002. Based on the selection scores, the harvesting analysis circuitry 1100 can identify the rack(s) 904, 1002 with the highest energy harvesting potential (e.g., greatest heat dissipation). For example, the harvesting analysis circuitry 1100 can identify the rack 904, 1002 with the highest selection score for energy harvesting, where the score indicates that the electronic component(s) 906, 1004 at that rack 904, 1002 provide for the greatest combination of power consumption (and, thus, heat output) and longevity.

After identifying the rack 904, 1002 with the highest selection score and, thus, highest heat energy reclamation potential, the example harvesting analysis circuitry 1100 of FIG. 11 executes the energy harvesting algorithm(s) 1126 to perform a series of checks to determine if the rack 904, 1002 identified from the selection score ranking meets additional criteria with respect to operations, adaptability, efficiency, and reliability. Put another way, the harvesting analysis circuitry 1100 verifies that the rack 904, 1002 can provide for sustained energy harvesting without, for example, compromising the stability of the electronic component(s) 906, 1004 at the rack 904, 1002, without encountering interruptions to the harvesting efforts due to upcoming maintenance, etc. For example, the harvesting analysis circuitry 1100 uses the electronic component capacity data 1116 to evaluate whether the electronic component(s) 906, 1004 of the identified rack 904, 1002 has capacity to perform additional workload(s). The harvesting analysis circuitry 1100 uses the maintenance schedule data 1120 to determine if the electronic component(s) 906, 1004 of the identified rack 904, 1002 are scheduled to undergo maintenance. As another example, the harvesting analysis circuitry 1100 can analyze the historical performance data 1118 to assess the ability of the electronic component(s) 906, 1004 of the selected rack 904, 1002 to perform under increased thermal loads. The harvesting analysis circuitry 1100 can consider other data 114 such as forecasted energy demands, sustainability goals, etc. Thus, in the example of FIG. 11, the energy harvesting algorithm(s) 1126 consider other factors beyond heat flux capacity, such as equipment age, maintenance schedules, etc.

If the rack 904, 1002 with the highest selection score does not satisfy the additional criteria, the harvesting analysis circuitry 1100 re-executes the energy harvesting algorithm(s) 1126 to identify another rack 904, 1002 based on thermal efficiency potential and re-performs the criteria checks for that rack 904, 1002. The harvesting analysis circuitry 1100 continues execute the energy harvesting algorithm(s) 1126 to evaluate the racks 904, 1002 based on the selection score ranking and the additional criteria until a rack 904, 1002 that satisfies the criteria is identified. The rack 904, 1002 with the highest selection score that also satisfies the additional criteria is selected by the harvesting analysis circuitry 1100 as the candidate (e.g., optimal candidate) for energy harvesting.

The factors considered by the energy harvesting algorithm(s) 1126 in generating the selection scores indicative of energy harvesting potential and/or performing the checks to verify that a rack 904, 1002 associated with the highest selection score meets other criteria can be assigned different weights or importance. For example, each criteria or factor (e.g., capacity for thermal load, maintenance schedule, thermal design power, historical performance, workload type, sustainability efforts) can be assigned a respective weight or priority score that indicates how much the factor contributes to the decision-making by the energy harvesting algorithm(s) 1126. Factors, variables, or criteria assigned higher weights will have greater influence on the outputs (e.g., predictions) generated by the energy harvesting algorithm(s) 1126 as compared to factors assigned lower weights. For example, if a first factor considers whether the electronic component 906, 1004 is running a high priority application is given a higher weight than a second factor that considers maintenance schedule, than the first factor will have more influence in the energy harvesting decision that the second factor.

In some examples, the energy harvesting algorithm(s) 1126 include predictive model(s) to anticipate workload fluctuation(s) and proactively adjust rack selection and/or cooling parameter(s) (e.g., coolant temperature). The predictive modeling can help maintain stable temperatures and prevent unexpected spikes that could damage the electronic component(s) 906, 1004 or compromise energy harvesting efficiency in view of workload changes.

In some examples, in addition to or as an alternative to executing the energy harvesting algorithm(s) 1126, the harvesting analysis circuitry 1100 executes one or more workload assignment algorithm(s) 1128 that assign workloads based on (e.g., primarily based on) temperature data 1112 associated with the electronic components 906, 1004. In some such examples, the harvesting analysis circuitry 1100 performs a transformation on the temperature data 1112 associated with electronic components 906, 1004 used during execution of the workload assignment algorithm(s) 1128. In particular, the harvesting analysis circuitry 1100 transforms the temperature data 1112 so that rather than avoiding assigning workload(s) to the electronic components 906, 1004 that already have increased thermal load relative to other electronic components 906, 1004, the workload assignment algorithm(s) 1128 assigns or transfers workloads to the electronic components 906, 1004 associated with the increased temperatures. In this way, the harvesting analysis circuitry 1100 facilitates concentration of heat generation at certain electronic components 906, 1004, rather than avoiding hot spots or areas of concentrated heat when assigning workloads.

In some examples, as a result of the execution of energy harvesting algorithm(s) 1126 and/or the workload assignment algorithm(s) 1128, the harvesting analysis circuitry 1100 determines that one or more electronic component(s) 906, 1004 that have not been assigned workloads or from which workloads have been transferred should enter a low power state. By entering a low power state, energy can be conserved at those electronic component(s) 906, 1004 while efforts to reclaim energy are concentrated at other electronic component(s) 906, 1004. In some examples, prior to finalizing the selection of the rack(s) for energy harvesting and/or instructions to move certain electronic components to low power states, the harvesting analysis circuitry 1100 performs and outputs a cost-benefit analysis indicative of factors such as energy prices, equipment costs, and maintenance downtime costs in view of the proposed workload and/or other operational changes for the electronic components 906, 1004 for energy harvesting purposes.

The workload determination circuitry 1102 of the example workload management circuitry 902 of FIG. 11 outputs instructions to control performance of workloads by the electronic component(s) 906, 1004 based on the analysis performed by the harvesting analysis circuitry 1100 (e.g., the execution of the energy harvesting algorithm(s) 1126, execution of the workload assignment algorithm(s) 1128). For example, the workload determination circuitry 1102 communicates with (e.g., causes instruction(s) to be transmitted to) the electronic component(s) 906, 1004 at the rack(s) 904, 1002 selected for energy harvesting to cause the electronic component(s) 906, 1004 to perform the assigned workloads and generate the increased heat outputs. Thus, the workload determination circuitry 1102 directs workload(s) and/or job(s) to rack(s) 904, 1002 with higher heat load flux capacity.

In some examples, the workload determination circuitry 1102 generates a graphical interface for display via user device(s) (e.g., personal compute devices such as tablets or smartphones) that identifies the location of the rack(s) 904, 1002 selected for energy harvesting within the environment 900, 1000 (e.g., a location within the data center).

In examples in which liquid coolant is used to cool the electronic component(s) 906, 1004, the CDU control circuitry 1104 of the example workload management circuitry 902 can control a temperature of the coolant based on, for example, the coolant temperature data 1122 and the outputs of the energy harvesting algorithm(s) 1126. As disclosed herein, as a result of execution of the energy harvesting algorithm(s) 1126, the harvesting analysis circuitry 1100 generates power consumption values for the electronic component(s) 906, 1004. Based on the estimated power consumption, the harvesting analysis circuitry 1100 can determine (e.g., estimate, predict) power dissipation or heat output by the electronic component(s) 906, 1004 at each rack 904, 1002 In some examples, the harvesting analysis circuitry 1100 uses the estimated power dissipation for the each selected harvesting rack 904, 1002 to determine (e.g., predict) a temperature differential between the coolant entering the racks 904, 1002 via the flow paths 910, 912, 914 and returning to the CDU 908 via the flow path 916 as part of predicting the energy harvesting potential for the racks 904, 1002.

The CDU control circuitry 1104 can regulate a temperature and/or flow rate of the coolant based on the power dissipation value for the rack(s) 904, 1002 selected for energy harvesting. For example, the CDU control circuitry 1104 can regulate the coolant temperature to increase the coolant temperature for the chosen harvesting rack(s) 904, 1002, thereby increasing the temperature at the harvesting rack(s) 904, 1002 and enhancing energy reclamation at the rack(s) 904, 1002. In adjusting the coolant temperature, the CDU control circuitry 1104 also considers the cooling needs of electronic component(s) 906, 1004 of other rack(s) 904, 1002 in the data center 900, 1000.

The monitoring circuitry 1106 of the example workload management circuitry 902 monitors one or more of the workload data 1108, the temperature data 1112, the TDP data 1114, the electronic component capacity data 1116, the historical performance data 1118, the maintenance schedule data 1120, the coolant temperature data 1122, and any of the other data 1124. Based on the monitoring, the monitoring circuitry 1106 identifies effects of workload adjustments and temperature changes with respect to energy harvesting efficiency. The monitoring circuitry 1106 determines if, for example, the rack 904, 1002 selected for energy harvesting should be adjusted via migration or assignment of workloads to the electronic component(s) 906, 1004. The monitoring circuitry 1106 communicates with the harvesting analysis circuitry 1100 to facilitate re-evaluation of the rack and/or electronic component selected for harvesting.

In some examples, the monitoring circuitry 1106 determines that the energy harvesting algorithm(s) 1126 should be re-executed if, for example, the temperature data 1112 for one or more electronic components 906, 1004 to which workload(s) where transferred exceeds a threshold, thereby indicating a risk of damage to the electronic component(s) 906, 1004. In some examples, if the coolant temperature data 1122 indicates that coolant outlet temperature exceeds a threshold value, the monitoring circuitry 1106 determines that the electronic component(s) 906, 1004 are overheating and/or the cooling system is insufficient for the current thermal loads. In some such examples, the monitoring circuitry 1106 communicates with, for example the CDU control circuitry 1104 to adjust the cooling and/or the workload determination circuitry 1102 to cause the workload(s) to be adjusted or stopped to avoid damage to the electronic component(s) 906, 1004. In some examples, the feedback generated by the monitoring circuitry 1106 is used to refine the energy harvesting algorithm(s) 1126 as part of machine learning.

In some examples, the workload management circuitry 902 of FIG. 11 can be implemented by a data center infrastructure management (DCIM) system that monitors and manages infrastructure components (e.g., power distribution units) of the data center 900, 1000. Also, although examples disclosed are primarily discussed in connection with energy reclamation via coolant at the CDU 908 and/or generation of electrical energy, in some examples, the workload management circuitry 902 can consider other types of energy in addition to thermal energy. For example, kinetic energy harvesting from server fans or piezoelectric energy harvesting from vibrations could provide additional energy sources.

While an example manner of implementing the workload management circuitry 902 of FIGS. 9 and 10 is illustrated in FIG. 11, one or more of the elements, processes, and/or devices illustrated in FIG. 11 may be combined, divided, re-arranged, omitted, eliminated, and/or implemented in any other way. Further, the example harvesting analysis circuitry 1100, the example workload determination circuitry 1102, the example CDU control circuitry 1104, and the example monitoring circuitry 1106, and/or, more generally, the example workload management circuitry 902 of FIG. 11, may be implemented by hardware alone or by hardware in combination with software and/or firmware. Thus, for example, any of the example harvesting analysis circuitry 1100, the example workload determination circuitry 1102, the example CDU control circuitry 1104, and the example monitoring circuitry 1106, and/or, more generally, the example workload management circuitry 902, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example workload management circuitry 902 of FIG. 11 may include one or more elements, processes, and/or devices in addition to, or instead of, those illustrated in FIG. 11, and/or may include more than one of any or all of the illustrated elements, processes and devices.

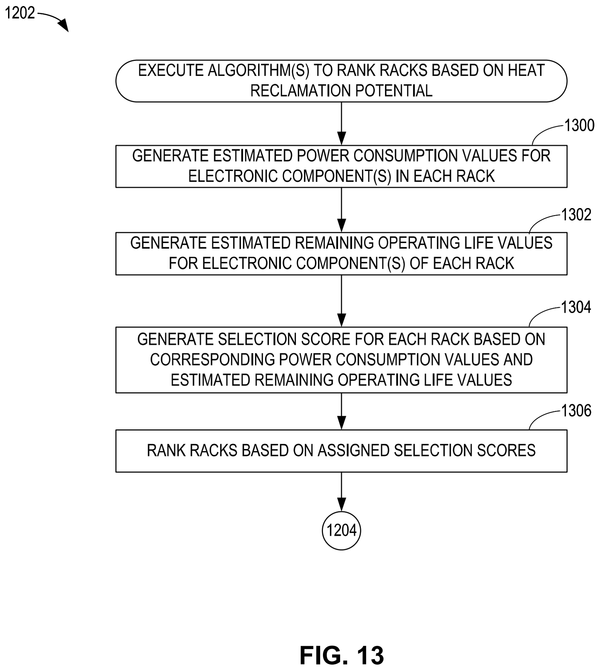

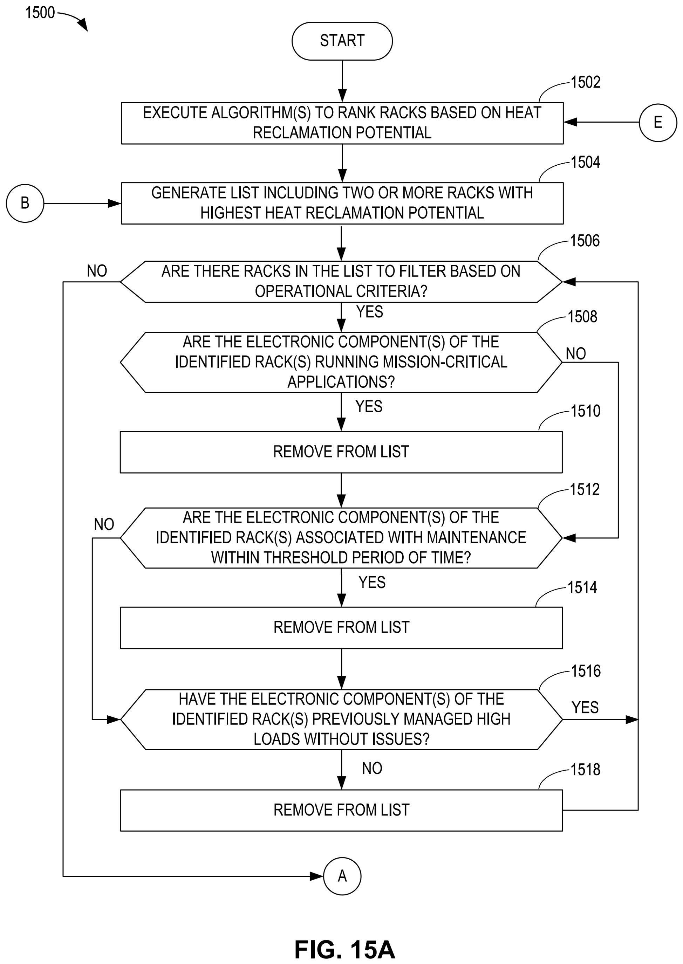

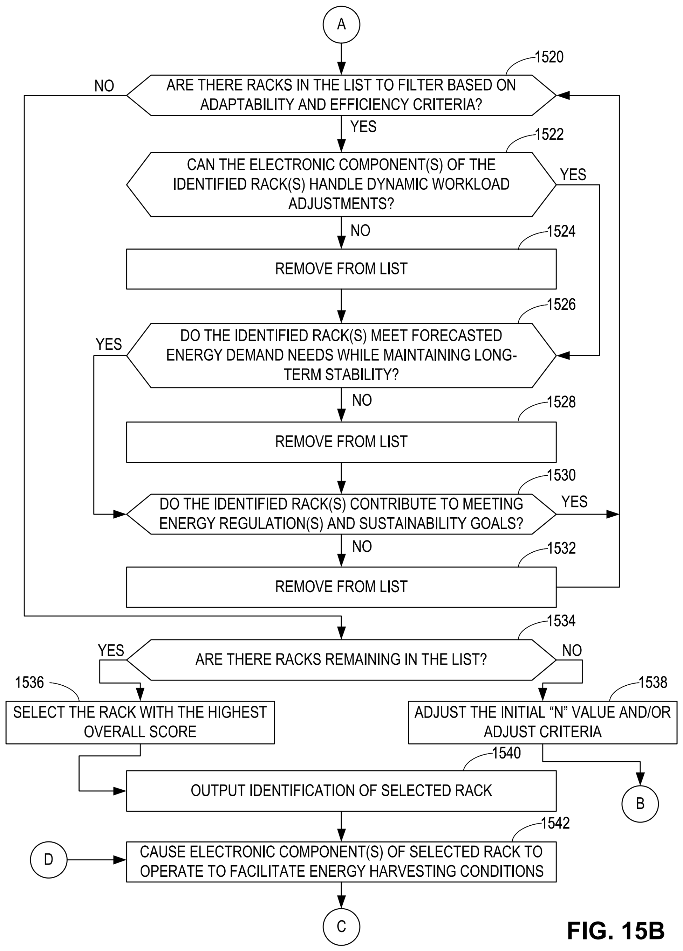

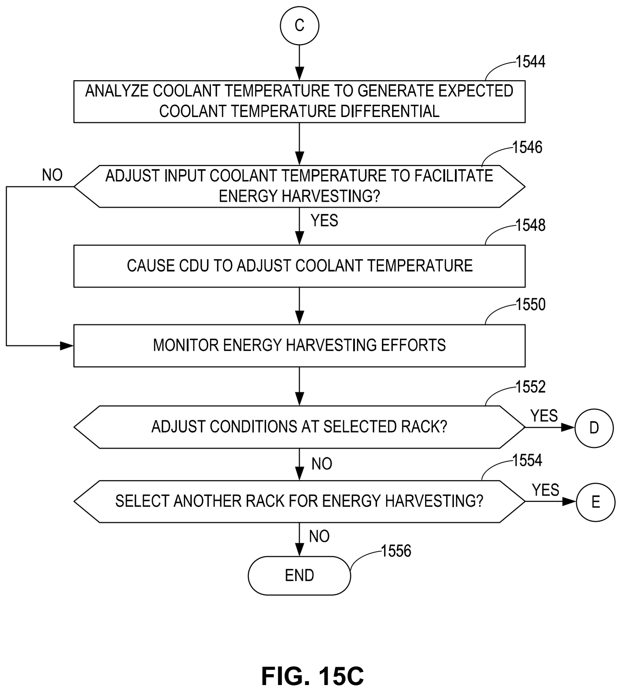

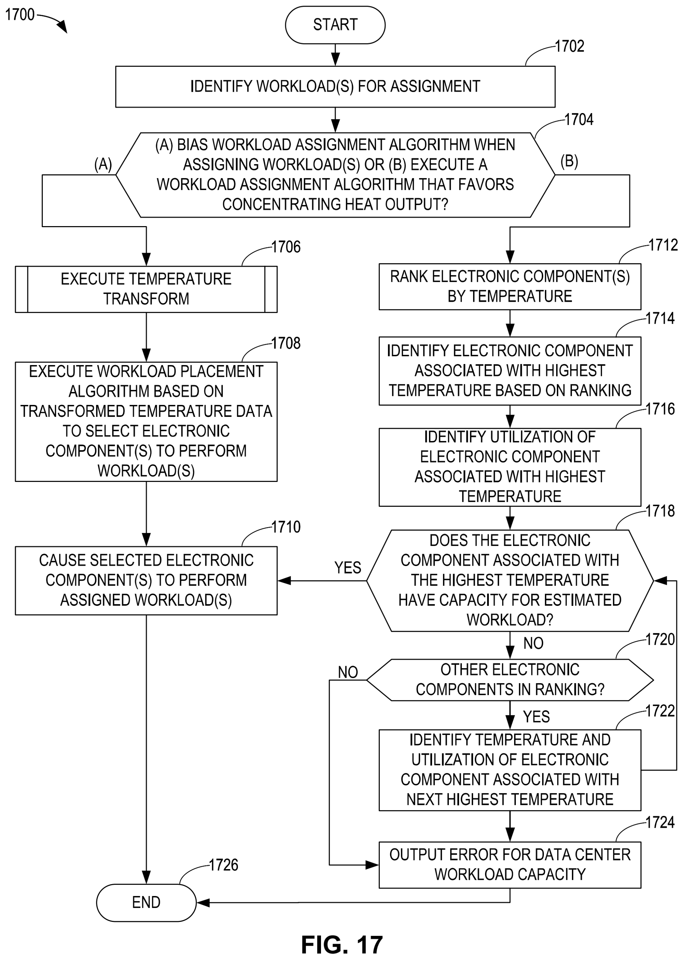

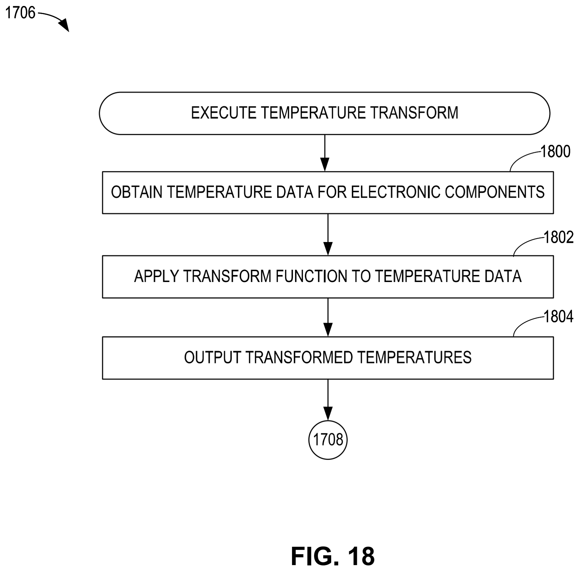

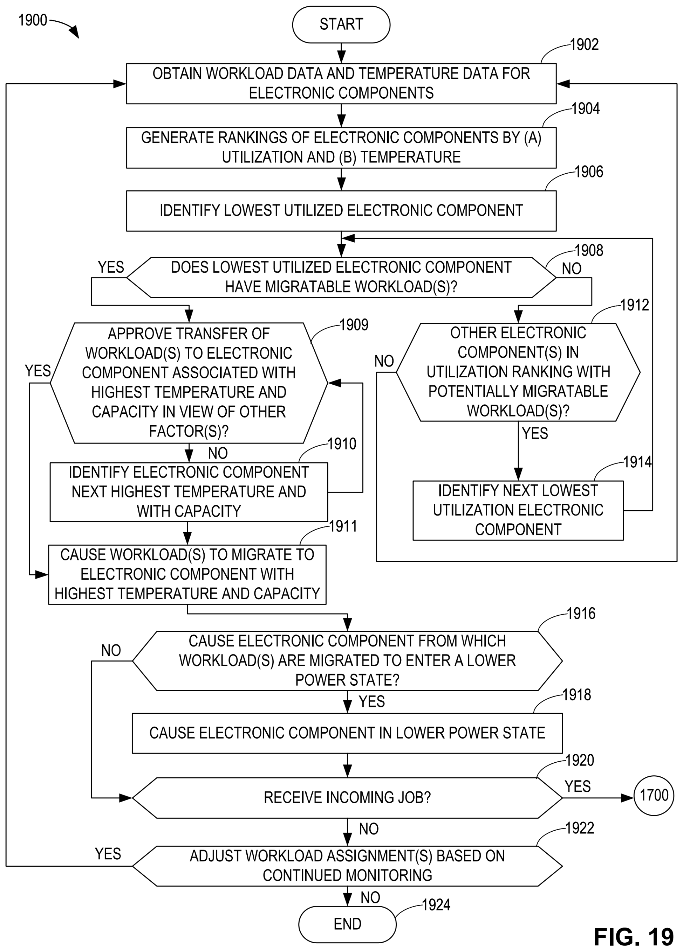

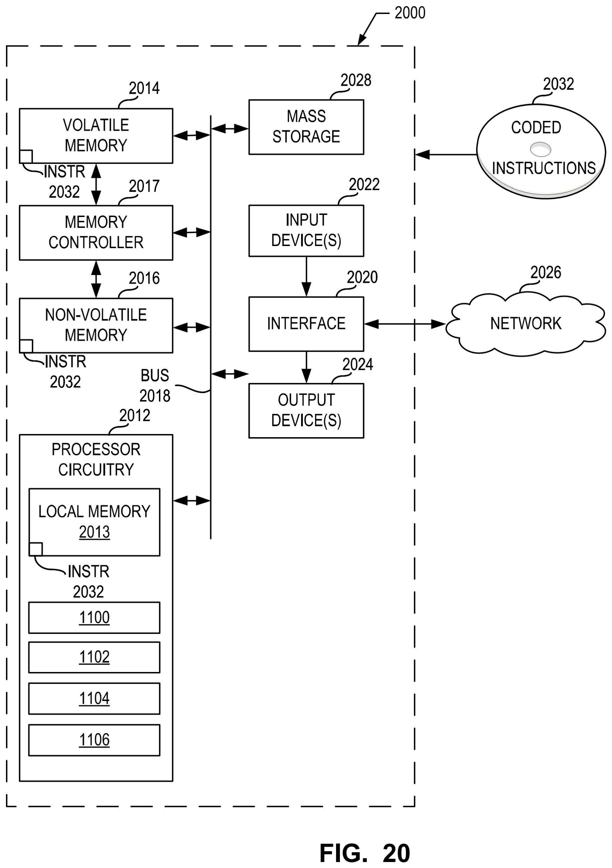

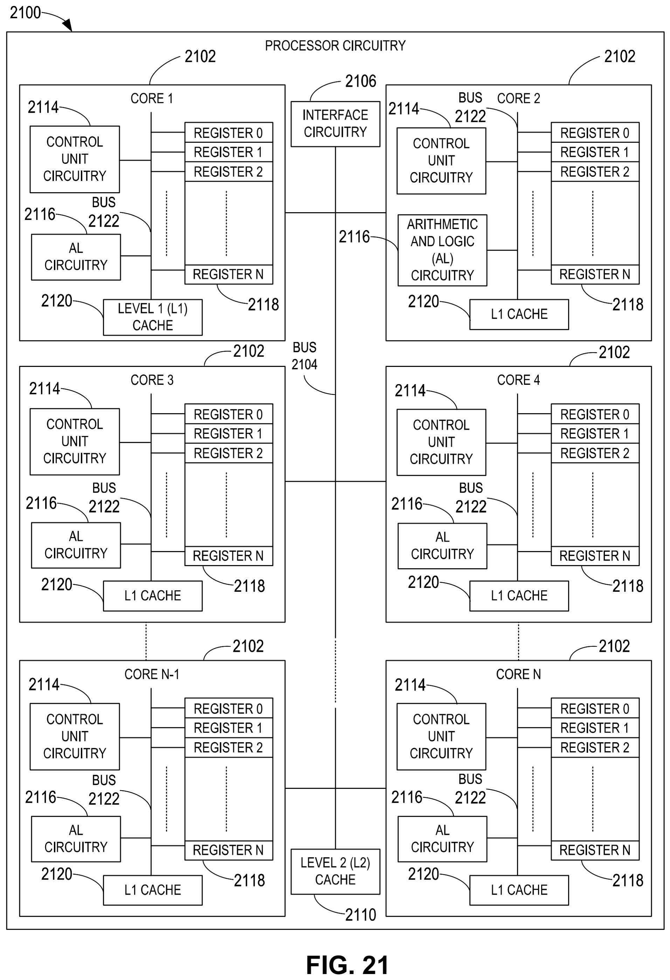

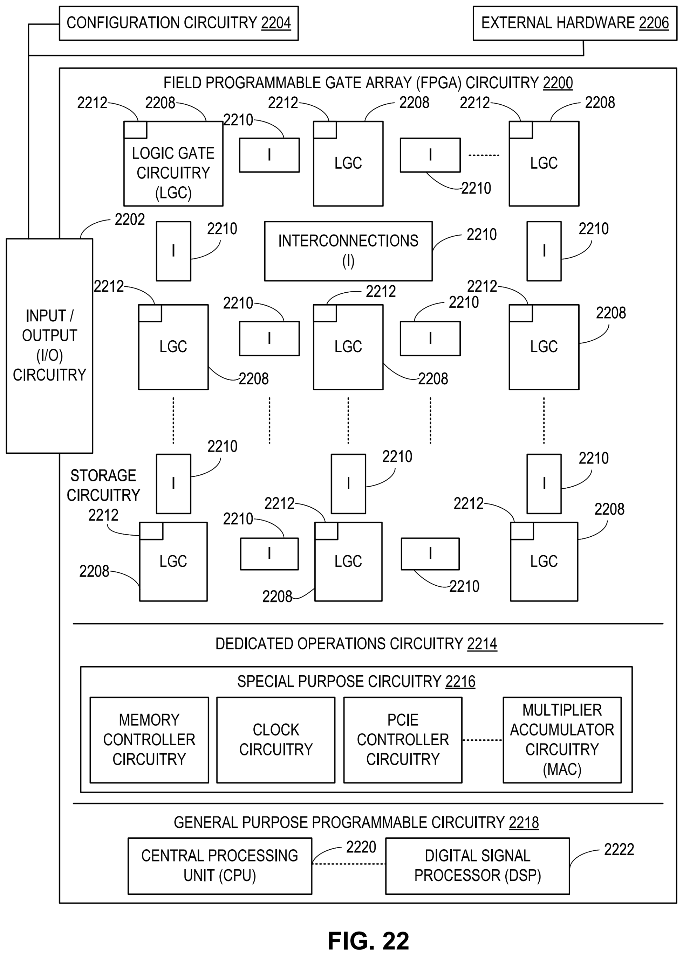

In some examples, the workload management circuitry 902 includes means for analyzing. For example, the means for analyzing may be implemented by harvesting analysis circuitry 1100. In some examples, the harvesting analysis circuitry 1100 may be instantiated by programmable circuitry such as the example programmable circuitry 2012 of FIG. 20. For instance, the harvesting analysis circuitry 1100 may be instantiated by the example microprocessor 2100 of FIG. 21 executing machine executable instructions such as those implemented by at least blocks 1202-1238 of FIGS. 12A-12C; blocks 1300-1306 of FIG. 13; blocks 1502-1538 of FIGS. 15A-15C; blocks 1702-1708 and 1712-1722 of FIG. 17; blocks 1800-1804 of FIG. 18; and blocks 1902-1910, 1912-1916, and 1920 of FIG. 19. In some examples, the harvesting analysis circuitry 1100 may be instantiated by hardware logic circuitry, which may be implemented by an ASIC, XPU, or the FPGA circuitry 2200 of FIG. 22 configured and/or structured to perform operations corresponding to the machine readable instructions. Additionally or alternatively, the harvesting analysis circuitry 1100 may be instantiated by any other combination of hardware, software, and/or firmware. For example, the harvesting analysis circuitry 1100 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the workload management circuitry 902 includes means for instructing. For example, the means for instructing may be implemented by workload determination circuitry 1102. In some examples, the workload determination circuitry 1102 may be instantiated by programmable circuitry such as the example programmable circuitry 2012 of FIG. 20. For instance, the workload determination circuitry 1102 may be instantiated by the example microprocessor 2100 of FIG. 21 executing machine executable instructions such as those implemented by at least blocks 1240, 1242 of FIGS. 12A-12C; blocks 1540 and 1542 of FIGS. 15A-15C; blocks 1710 and 1724 of FIG. 17; and block 1911 of FIG. 19. In some examples, the workload determination circuitry 1102 may be instantiated by hardware logic circuitry, which may be implemented by an ASIC, XPU, or the FPGA circuitry 2200 of FIG. 22 configured and/or structured to perform operations corresponding to the machine readable instructions. Additionally or alternatively, the workload determination circuitry 1102 may be instantiated by any other combination of hardware, software, and/or firmware. For example, the workload determination circuitry 1102 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

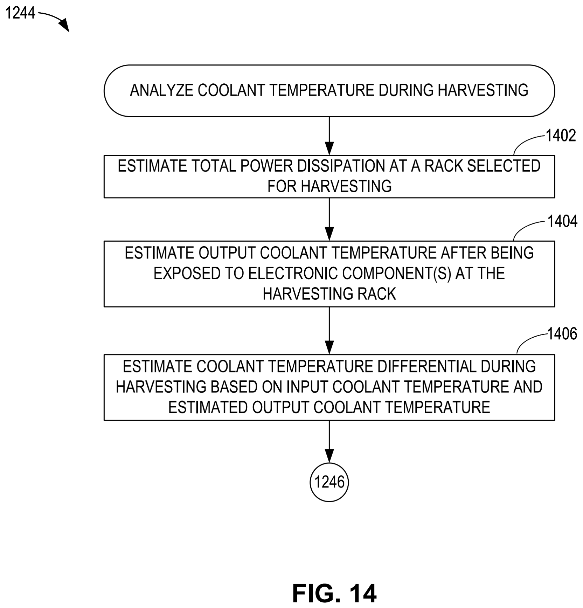

In some examples, the workload management circuitry 902 includes means for controlling. For example, the means for controlling may be implemented by CDU control circuitry 1104. In some examples, the CDU control circuitry 1104 may be instantiated by programmable circuitry such as the example programmable circuitry 2012 of FIG. 20. For instance, the CDU control circuitry 1104 may be instantiated by the example microprocessor 2100 of FIG. 21 executing machine executable instructions such as those implemented by at least blocks 1244-1248 of FIGS. 12A-12C; blocks 1402-1406 of FIG. 14; and blocks 1544-1548 of FIGS. 15A-15C. In some examples, the CDU control circuitry 1104 may be instantiated by hardware logic circuitry, which may be implemented by an ASIC, XPU, or the FPGA circuitry 2200 of FIG. 22 configured and/or structured to perform operations corresponding to the machine readable instructions. Additionally or alternatively, the CDU control circuitry 1104 may be instantiated by any other combination of hardware, software, and/or firmware. For example, the CDU control circuitry 1104 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the workload management circuitry 902 includes means for monitoring. For example, the means for monitoring may be implemented by monitoring circuitry 1106. In some examples, the monitoring circuitry 1106 may be instantiated by programmable circuitry such as the example programmable circuitry 2012 of FIG. 20. For instance, the monitoring circuitry 1106 may be instantiated by the example microprocessor 2100 of FIG. 21 executing machine executable instructions such as those implemented by at least blocks 1250- 1254 of FIGS. 12A-12C; 1550-1554 of FIGS. 15A-15C; and block 1922 of FIG. 19. In some examples, the monitoring circuitry 1106 may be instantiated by hardware logic circuitry, which may be implemented by an ASIC, XPU, or the FPGA circuitry 2200 of FIG. 22 configured and/or structured to perform operations corresponding to the machine readable instructions. Additionally or alternatively, the monitoring circuitry 1106 may be instantiated by any other combination of hardware, software, and/or firmware. For example, the monitoring circuitry 1106 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

Flowchart(s) representative of example machine-readable instructions, which may be executed by programmable circuitry to implement and/or instantiate the workload management circuitry 902 of FIG. 11 and/or representative of example operations which may be performed by programmable circuitry to implement and/or instantiate the workload management circuitry 902 of FIG. 11, are shown in FIGS. 12A-12C, 13, 14, 15A-15C, 17, 18, and 19. The machine-readable instructions may be one or more executable programs or portion(s) of one or more executable programs for execution by programmable circuitry such as the programmable circuitry 2012 shown in the example processor platform 2000 discussed below in connection with FIG. 20 and/or may be one or more function(s) or portion(s) of functions to be performed by the example programmable circuitry (e.g., an FPGA) discussed below in connection with FIGS. 21 and/or 22. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart(s) illustrated in FIGS. 12A-12C, 13, 14, 15A-15C, 17, 18, and 19, many other methods of implementing the example workload management circuitry 902 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks, and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable, and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 12A-12C, 13, 14, 15A-15C, 17, 18, and 19 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic, and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIGS. 12A-12C set forth a flowchart representative of example machine-readable instructions and/or example operations 1200 that may be executed, instantiated, and/or performed by programmable circuitry to select a rack within a data center for energy harvesting based on workload management and application of selection criteria. In some examples, the operations 1200 of FIGS. 12A-12C are used for a data center including, for example, 1,000 racks or less.

The example machine-readable instructions and/or the example operations 1200 begin at block 1202, at which the harvesting analysis circuitry 1100 of the example workload management circuitry 902 of FIG. 11 executes the energy harvesting algorithm(s) 1126 to rank the rack(s) 904, 1002 based on heat reclamation potential, as further disclosed in connection with FIG. 13. The harvesting analysis circuitry 1100 executes the energy harvesting algorithm(s) 1126 based on data input(s) including, for example, the workload data 1108, the temperature data 1112, the thermal design power (TDP) data 1114, the historical performance data 118, the maintenance scheduled at 1120, etc. As a result of execution of the energy harvesting algorithm(s) 1126, the harvesting analysis circuitry 1100 generates a ranking of the racks 904, 1002 indicative of thermal efficiency or energy harvesting potential of each rack 904, 1002 based on, for example, a predicted heat output of the electronic components 906, 1004.

At block 1204, the harvesting analysis circuitry 1100 identifies the rack with the highest heat reclamation potential based on the ranking. For example, the harvesting analysis circuitry 1100 can identify the rack with the highest predicted heat output based on the ranking generated at block 1202.

Starting with block 1206, the harvesting analysis circuitry 1100 executes the energy harvesting algorithm(s) 1126 to determine if the rack identified at block 1204 based on the ranking satisfies additional criteria such that the rack 904, 1002 is a candidate (e.g., an optimal candidate) for energy harvesting. As a result of the additional criteria analysis, the harvesting analysis circuitry 1100 verifies that the rack 904, 1002 identified at block 1204 should be a harvesting rack or determines that another rack 904, 1002 should be selected. In some examples, one or more of the example criteria set forth in blocks 1206, 1210, 1214, 1218, 1222, 1226, 1230, 1234 can differ, be adjusted, be removed, be given higher weight, etc. in connection with the example instructions 1200.

At block 1206, the harvesting analysis circuitry 1100 determines if the selected rack 904, 1002 is executing any critical or high priority applications or operations. The critical or high priority applications can be identified based on user input(s) provided to the energy harvesting algorithm(s) 1126. If the selected rack 904, 1002 is performing critical or high priority application(s), then the harvesting analysis circuitry 1100 determines that this rack should not be selected for energy harvesting so as not to disrupt the performance of the critical or high priority application(s) or operation(s) (e.g., by assigning additional workloads to the rack, by diverting processing resources, etc.). As such, at block 1208, the harvesting analysis circuitry 1100 re-executes the energy harvesting algorithm(s) 1126 for the racks 904, 1002 in the data center 900, 1000, excluding the rack that was selected at block 1204, but is running the critical or high priority application(s). Control returns to block 1204, at which the harvesting analysis circuitry 1100 selects another rack 904, 1002 based on the ranking of racks by heat reclamation potential as determined by the re-execution of the energy harvesting algorithm(s) 1126.

If, at block 1206, the harvesting analysis circuitry 1100 determines that the selected rack 904, 1002 is not running any critical or high priority applications, then at block 1210, the harvesting analysis circuitry 1100 performs a maintenance schedule check. The harvesting analysis circuitry 1100 checks, based on the maintenance schedule data 1120, whether any of the electronic components 906, 1004 of the selected rack 904, 1002 are scheduled for maintenance within a threshold period of time (e.g., defined by user input(s)). If the electronic component(s) 906, 1004 of the selected rack are scheduled for upcoming maintenance within the threshold period of time, then at block 1212, the harvesting analysis circuitry 1100 re-executes the energy harvesting algorithm(s) 1126 for the racks 904, 1002 in the data center 900, 1000, excluding the rack(s) that were selected at block 1204 but are associated with upcoming maintenance. Control returns to block 1204, at which the harvesting analysis circuitry 1100 selects another rack 904, 1002 based on the ranking of racks by heat reclamation potential as determined by the re-execution of the energy harvesting algorithm(s) 1126.

If, at block 1210, the harvesting analysis circuitry 1100 determines that the identified rack 904, 1002 is not associated with upcoming maintenance, then at block 1214, the harvesting analysis circuitry 1100 analyzes the historical performance data 1118 for the electronic components 906, 1004 of the selected rack 904, 1002 to assess how the electronic component(s) 906, 1004 have previous performed under increased workloads and, thus increased thermal stress, in the past. If the historical performance data 1118 for the electronic component(s) 906, 1004 of the selected rack 904, 1002 indicates that the electronic component(s) 906, 1004 experienced performance or operational issues associated with increased workloads and/or operating temperatures, the harvesting analysis circuitry 1100 decides that another rack 904, 1002 is likely to be more reliable for energy harvesting purposes (e.g., for consistent energy reclamation). As such, at block 1216, the harvesting analysis circuitry 1100 re-executes the energy harvesting algorithm(s) 1126 for the racks 904, 1002 in the data center 900, 1000, excluding the rack(s) that were selected at block 1204 but for which historical performance issues have been identified. Control returns to block 1204, at which the harvesting analysis circuitry 1100 selects another rack 904, 1002 based on the ranking of racks by heat reclamation potential as determined by the re-execution of the energy harvesting algorithm(s) 1126.

If, at block 1214, the harvesting analysis circuitry 1100 determines that the historical performance data 1118 indicates that the electronic component(s) 906, 1004 of the identified rack 904, 1002 are capable of substantially consistently capable of operating under increased temperatures, then at block 1218, the harvesting analysis circuitry 1100 assesses the ability of the electronic component(s) 906, 1004 to undergo workload adjustments without impacting performance. In particular, the harvesting analysis circuitry 1100 determines if the workload(s) of the electronic component(s) 906, 1004 can be dynamically adjusted (e.g., in real-time or substantially real-time, such as within one second) to maintain energy harvesting conditions (e.g., increase heat output) without impacting performance of the electronic component(s) 906, 1004. For example, over time, additional workloads may need to be transferred to the electronic component(s) 906, 1004 of the selected rack 904, 1002 to enable continued energy harvesting (e.g., sustained heat output) at the selected rack 904, 1002. At block 1218, the harvesting analysis circuitry 1100 determines whether the workloads can be dynamically adjusted without affecting performance by the electronic component(s) 906, 1004.

If, at block 1218, the harvesting analysis circuitry 1100 determines that dynamic changes to the job assignments may affect performance at the selected rack 904, 1002, then at block 1220, the harvesting analysis circuitry 1100 re-executes the energy harvesting algorithm(s) 1126 for the racks 904, 1002 in the data center 900, 1000, excluding the rack(s) that were selected at block 1204 but for which workload adjustment issues have been identified. Control returns to block 1204, at which the harvesting analysis circuitry 1100 selects another rack 904, 1002 based on the ranking of racks by heat reclamation potential as determined by the re-execution of the energy harvesting algorithm(s) 1126.

If, at block 1218, the harvesting analysis circuitry 1100 determines that the electronic component(s) 906, 1004 are responsive to dynamic adjustments to workloads to maintain the energy harvesting potential of the selected rack 904, 1002 without impacting performance, then at block 1222, the harvesting analysis circuitry 1100 assesses the potential of the selected rack 904, 1002 to provide for substantially consistent energy harvesting (e.g., sustained, increased heat output over time). For example, the harvesting analysis circuitry 1100 evaluates the workloads to be performed by the electronic component(s) 906, 1004 of the selected rack 904, 1002 to assess the type of heat likely to be generated and whether such heat is suitable for energy harvesting. In particular, some types of workloads cause the electronic component(s) 906, 1004 to operate at consistently increased temperatures over time while other types of workloads may cause temperature(s) of the electronic component(s) 906, 1004 to fluctuate over time. Because operation of the electronic component(s) 906, 1004 at consistently high temperatures results in more consistent heat output for energy harvesting purposes, the harvesting analysis circuitry 1100 can evaluate the energy harvesting potential of the selected rack 904, 1002 based on the type of workloads to be performed at the rack.

If, at block 1222, the harvesting analysis circuitry 1100 determines that the selected rack 904, 1002 may not provide for consistent (e.g., non-fluctuating) energy harvesting conditions due to, for instance, workload type, then at block 1224, the harvesting analysis circuitry 1100 re-executes the energy harvesting algorithm(s) 1126 for the racks 904, 1002 in the data center 900, 1000, excluding the rack(s) that were selected at block 1204 but for which consistent heat output issues have been identified. Control returns to block 1204, at the harvesting analysis circuitry 1100 selects another rack 904, 1002 based on the ranking of racks by heat reclamation potential as determined by the re-execution of the energy harvesting algorithm(s) 1126.

If, at block 1222, the harvesting analysis circuitry 1100 determines that the selected rack 904, 1002 is likely to provide for consistent (e.g., non-fluctuating) energy harvesting conditions, then at block 1226, the harvesting analysis circuitry 1100 determines whether the identified rack 904, 1002 includes components to facilitate generation of sustained, increased thermal loads. For example, the harvesting analysis circuitry 1100 can assess whether the selected rack 904, 1002 includes cooling fan(s) to enable the electronic component(s) 906, 1004 to sustain increased thermal loads over time. In some examples, the harvesting analysis circuitry 1100 identifies properties of the power supplies provided to the electronic component(s) 906, 1004 in assessing the ability of the electronic component(s) to handle increased thermal loads.

If, at block 1226, the harvesting analysis circuitry 1100 determines that the rack does not have components (e.g., cooling fans) to assist with sustaining increased thermal loads over time, then at block 1228, the harvesting analysis circuitry 1100 re-executes the energy harvesting algorithm(s) 1126 for the racks 904, 1002 in the data center 900, 1000, excluding the rack(s) that were selected at block 1204 but for which consistent heat output issues have been identified. Control returns to block 1204, at the harvesting analysis circuitry 1100 selects another rack 904, 1002 based on the ranking of racks by heat reclamation potential as determined by the re-execution of the energy harvesting algorithm(s) 1126.

If, at block 1226, the harvesting analysis circuitry 1100 determines that the selected rack 904, 1002 is capable of providing for consistent (e.g., non-fluctuating) energy harvesting conditions, then at block 1230, the harvesting analysis circuitry 1100 determines whether the amount of heat expected to be reclaimed from the selected rack 904, 1002 meets forecasted energy demands while maintaining operational stability of the electronic component(s) 906, 1004. For example, the harvesting analysis circuitry 1100 can favor racks that meet short-term energy harvesting needs while maintaining long-term stability of the electronic component(s) 906, 1004.

If, at block 1230, the harvesting analysis circuitry 1100 determines that the heat output at the selected rack 904, 1002 is not likely to meet forecasted energy demand and/or the long-term stability of the electronic component(s) 906, 1004 of the selected rack 904, 1002 may be compromised in attempting to meet the demand, then at block 1232, the harvesting analysis circuitry 1100 re-executes the energy harvesting algorithm(s) 1126 for the racks 904, 1002 in the data center 900, 1000, excluding the rack(s) that were selected at block 1204 but for which issues with the ability to meet forecasted energy demands have been identified. Control returns to block 1204, at the harvesting analysis circuitry 1100 selects another rack 904, 1002 based on the ranking of racks by heat reclamation potential as determined by the re-execution of the energy harvesting algorithm(s) 1126.

If, at block 1230, the harvesting analysis circuitry 1100 determines that the heat output at the selected rack 904, 1002 is likely to meet forecasted energy demand while maintaining the long-term stability of the electronic component(s) 906, 1004 of the selected rack 904, 1002, then at block 1234, the harvesting analysis circuitry 1100 determines if the energy harvesting efforts at the selected rack 904, 1002 contribute to meeting or complying with local regulations regarding energy efficiency, waste heat recovery, and environmental impact. For example, the harvesting analysis circuitry 1100 can determine if the energy harvesting efforts will contribute to heat re-use that offsets or contributed to reducing carbon footprints.

If, at block 1234, the harvesting analysis circuitry 1100 determines that the energy harvesting efforts using the selected rack 904, 1002 may not contribute to compliance with local energy regulations and/or sustainability goals, then at block 1236, the harvesting analysis circuitry 1100 re-executes the energy harvesting algorithm(s) 1126 for the racks 904, 1002 in the data center 900, 1000, excluding the rack(s) that were selected at block 1204 but for which issues with the ability to contribute to or comply with energy regulations and/or sustainability goals have been identified. Control returns to block 1204, at the harvesting analysis circuitry 1100 selects another rack 904, 1002 based on the ranking of racks by heat reclamation potential as determined by the re-execution of the energy harvesting algorithm(s) 1126.

If the selected rack 904, 1002 meets the efficiency and reliability criteria set forth in blocks 1206, 1210, 1214, 1218, 1222, 1226, 1230, 1234, then at block 1238, the harvesting analysis circuitry 1100 confirms the identified rack 904, 1002 as the rack from which heat output is to be concentrated for energy harvesting purposes. However, if none of the racks 904, 1002 identified based on the ranking (or re-rankings) meet all of the criteria, then, in some examples, the harvesting analysis circuitry 1100 may adjust or remove some of the criteria checks set forth in blocks 1206, 1210, 1214, 1218, 1222, 1226, 1230, 1234 in addition to or instead of re-running the energy harvesting algorithm(s) 1126 at block 1236.

At block 1240, the workload determination circuitry 1102 outputs identification of the selected rack via, for example, a user interface that displays the location of the selected rack in the data center.

At block 1242, the workload determination circuitry 1102 causes the electronic component(s) 906, 1004 of the selected rack 904, 1002 to operate to facilitate energy harvesting conditions. For example, the workload determination circuitry 1102 transmits instructions to assign workloads to the electronic component(s) 906, 1004 of the selected rack 904, 1002, to transfer workloads from electronic component(s) 906, 1004 of other racks 904, 1002, etc. such that a number of workloads assigned to the electronic component(s) 906, 1004 of the selected harvesting rack 904, 1002 is increased relative to the electronic component(s) 906, 1004 of the non-harvesting rack(s) 904, 1002.

At block 1244, the CDU control circuitry 1104 analyzes the coolant temperature to determine if the liquid coolant temperature provided to the selected rack 904, 1002 should be adjusted, as further disclosed in connection with FIG. 14. For example, the CDU control circuitry 1104 can estimate a coolant temperature differential based on the current temperature of the liquid coolant provided to the selected rack 904, 1002 and the estimated temperature of the coolant after passing through the rack 904, 1002 while the electronic component(s) 906, 1004 are operating under increased thermal loads as part of energy harvesting. Based on the estimated coolant temperature differential, the CDU control circuitry 1104 determines if the temperature of the input coolant provided to the selected rack 904, 1002 should be adjusted (e.g., increased) to increase efficiency in capturing the heat output by the harvesting rack 904, 1002.

If, at block 1246, the CDU control circuitry 1104 determines that the coolant temperature should be adjusted, the CDU control circuitry 1104 instructs the CDU 908 to adjust the coolant temperature and/or flow rate (block 1248).

At block 1250, the monitoring circuitry 1106 monitors, for example, the workload data 1108, the temperature data 1112, and the electronic component capacity data 1116. Based on the monitoring, at block 1252 the monitoring circuitry 1106 determines conditions at the rack 904, 1002 selected for energy harvesting should be adjusted via, for example, migration or assignment of workloads to the electronic component(s) 906, 1004 of the selected rack 904, 1002 to sustain the heat output for energy harvesting purposes. In some examples, at block 1254, the monitoring circuitry 1106 determines if another rack 904, 1002 should be selected for energy harvesting (e.g., if the originally selected rack is no longer capable of sustaining the increased thermal loads without the electronic component(s) 906, 1004 experiencing performance issues). In such examples, control returns to block 1202 to rank the racks based on heat reclamation potential. The example instructions 1200 end at block 1256.

FIG. 13 is a flowchart of an example implementation of block 1202 of the example operations 1200 of FIGS. 12A-12C for ranking the racks 904, 1002 based on heat reclamation potential. At block 1300, the harvesting analysis circuitry 1100 executes the energy harvesting algorithm(s) 1126 to generate estimated power consumption values for the electronic component(s) 906, 1004 (e.g., server(s), GPU(s)) in each rack 904, 1002. The estimated power consumption values can be generated based on, for example, the workload data 1108, the TDP data 114, and the historical performance data 1118 for the electronic component(s) 906, 1004. In some examples, the harvesting analysis circuitry 1100 estimates the power consumption values based on current and predicted workloads using the workload data 1108. For example, the harvesting analysis circuitry 1100 can estimate a power consumption value for an electronic component 906, 1004 based on a range of power consumed by the electronic component over time in connection with performance of different workloads as indicated in the historical performance data 1118 for that electronic component.

In some examples, to evaluate the power consumption, the harvesting analysis circuitry 1100 uses the coolant temperature data 1122 to estimate heat output by the electronic components 906, 1004 based on temperature differentials between coolant flowing into and out of the racks 904, 1002. The more power consumed by the electronic component(s) 906, 1004, the higher the coolant outlet temperature because more heat is being generated and transferred to the coolant. For example, the harvesting analysis circuitry 1100 can identify racks 904, 1002 associated with a greater temperature differential than other racks 904, 1002 as candidates for energy harvesting and, thus, a factor in generating the energy reclamation potentials.

At block 1302, the harvesting analysis circuitry 1100 generates estimated remaining operating life values for the electronic component(s) of each rack 904, 1002. The harvesting analysis circuitry 1100 can estimate the remaining operating life value for an electronic component 906, 1004 based on expected operating life for the electronic component (e.g., manufacturer data, average operation life for the same or similar types of electronic components, the historical performance data 1118, the maintenance schedule data 1120, etc.) as well as factors such as thermal and power fatigue.

At block 1304, the harvesting analysis circuitry 1100 generates a selection score for each rack 904, 1002 based on the estimated power consumption value(s) and the estimated remaining operating life value(s) assigned to the electronic component(s) 906, 1004. For example, the harvesting analysis circuitry 1100 can associate the combination of the estimated power consumption value(s) and the estimated remaining operating life value(s) associated with each rack 904, 1002 with a selection score for that rack 904, 1002, where the selection score mapping can be defined based on user input(s).

At block 1306, the harvesting analysis circuitry 1100 ranks the racks based on the selection scores assigned to the racks 904, 1002. Control proceeds to block 1204.

FIG. 14 is a flowchart of an example implementation of block 1244 of the example operations 1200 of FIGS. 12A-12C for analyzing coolant temperature during harvesting. Although the example instructions 1244 of FIG. 14 are discussed in connection with analyzing coolant temperature during harvesting, the example instructions 1244 could be executed to analyze coolant temperature with respect to rack(s) 904, 1002 that have not been selected for harvesting.

At block 1402, the CDU control circuitry 1104 estimates the total power dissipation for selected harvesting rack 904, 1002 as a result of the concentration of the workloads at the electronic component(s) 906, 1004 of the harvesting rack 904, 1002. For example, the CDU control circuitry 1104 can estimate the total power dissipation at the harvesting rack 904, 1002 based on estimated power consumption values associated with performance of the (e.g., newly assigned) workloads determined by the harvesting analysis circuitry 1100. The CDU control circuitry 1104 can convert the estimated power consumption value(s) into power output(s), or heat produced, during operation.

At block 1404, the CDU control circuitry 1104 estimates the temperature of the coolant after being exposed to the electronic component(s) of the selected rack 904, 1002 during harvesting. In some examples, the CDU control circuitry 1104 determines or estimates the outlet coolant temperature during harvesting based on outputs of the sensor(s) 924 along the second flow path 916. In some examples, the CDU control circuitry 1104 estimates the outlet coolant based on the estimated total power dissipation determined at block 1402. For example, the CDU control circuitry 1104 can estimate an increase in temperature of the coolant based on the estimated heat output at the rack 904, 1002.

At block 1406, the CDU control circuitry 1104 estimates a coolant temperature differential during harvesting at the selected rack 904, 1002 based on the temperature of the input coolant flowing from the CDU 908 and the estimated output coolant temperature. Control proceeds to block 1246.

FIGS. 15A-15C is another flowchart representative of example machine-readable instructions and/or example operations 1500 that may be executed, instantiated, and/or performed by programmable circuitry to select a rack within a data center for energy harvesting based on workload management and application of selection criteria. In comparison to the example instructions 1200 of FIGS. 12A-12C, in some examples, the example machine-readable instructions and/or the example operations 1500 of FIGS. 15A-15C provides for filtering of multiple racks based on the selection criteria and, thus, can provide for increased efficiency in selecting a rack for energy harvesting in a data center including, for example, more than 1,000 racks. However, the example operations 1500 of FIGS. 15A-15C could be used to evaluate data centers including fewer racks.

The example instructions 1500 begin at block 1502, at which the harvesting analysis circuitry 1100 of the example workload management circuitry 902 executes the energy harvesting algorithm(s) 1126 to rank the racks 904, 1002 for energy harvesting, as disclosed in connection with block 1202 of FIGS. 12A-12C and FIG. 13.

At block 1504, the harvesting analysis circuitry 1100 generates a list including two or more racks 904, 1002 with the highest heat reclamation potential. In this example, the harvesting analysis circuitry 1100 selects two or more racks 904, 1002 based on the ranking to increase the efficiency in which the racks 904, 1002 are evaluated in view of, for example, the number of racks 904, 1002 in the data center.

At block 1506, the harvesting analysis circuitry 110 executes the energy harvesting algorithm(s) 1126 to filter the racks identified at block 1504 based on operational criteria including whether the electronic component(s) 906, 1004 of the racks 904, 1002 are performing critical or high priority applications or operations (block 1508), whether the electronic component(s) 906, 1004 of the racks 904, 1002 are scheduled to undergo maintenance within a threshold period of time (block 1512), and whether the electronic component(s) 904, 1002 of the racks 904, 1002 are capable of sustaining high thermal loads as determined based on, for example, the historical performance data 1118, the maintenance schedule data 1120 etc. (block 1516). If any of the racks 904, 1002 in the list generated at block 1504 meet the criteria, thereby indicating that the rack(s) 904, 1002 are not likely to be a candidate (e.g., an optimal candidate) for energy harvesting, then the harvesting analysis circuitry 1100 removes those rack(s) 904, 1002 from the list generated at block 1504 (blocks 1510, 1514, 1518). The harvesting analysis circuitry 1100 analyzes each of the racks 904, 1002 in the list generated at block 1504 until there are no further racks 904, 1002 in the list to analyze with respect to operational criteria.

When there are not further racks in the list to analyze with respect to the operational criteria, control proceeds to block 1520, at which the harvesting analysis circuitry 1100 executes the energy harvesting algorithm(s) 1126 to analyze the remaining racks 904, 1002 in the list (i.e., the racks remaining after filtering for operational criteria) with respect to adaptability and/or efficiency criteria. For example, the harvesting analysis circuitry 1100 assesses whether the workloads of the electronic component(s) 906, 1004 of the respective racks 904, 1002 can be dynamically adjusted without negatively affecting operation or performance of the electronic component(s) (block 1522). The harvesting analysis circuitry 1100 determines if selection of a rack 904, 1002 meets forecasted energy demands while maintaining operational stability of the electronic component(s) 906-1-906-n, 908-1-908-n, *910-1-910-n, 1004-n* of that rack 904, 1002 (block 1526). The harvesting analysis circuitry 1100 determines if selection of a rack 904, 1002 and the resulting power dissipation facilitates compliance with local energy regulations and/or sustainability goals (block 1530). If any of the racks 904, 1002 in the list do not meet the adaptability and efficiency criteria, the harvesting analysis circuitry 1100 removes the rack(s) 904, 1002 from the list of racks 904, 1002 for potential energy harvesting (block 1524, 1528, 1532). The harvesting analysis circuitry 1100 analyzes each of the racks 904, 1002 in the list generated at block 1504 until there are no further racks 904, 1002 in the list to analyze with respect to adaptability and/or efficiency criteria, at which point control proceeds to block 1534.

At block 1534, the harvesting analysis circuitry 1100 determines if there are rack(s) remaining in the list of racks 904, 1002 for potential energy harvesting. If there is more than one rack 904, 1002 remaining in the list, then at block 1536, the harvesting analysis circuitry 1100 selects the rack 904, 1002 with the highest selection score (which in some instances, may be the only rack remaining in the list). If there are no racks 904, 1002 remaining in the list, then at block 1538, the harvesting analysis circuitry 1100 returns to block 1504 to select an additional number of racks 904, 1002 to include in the list of racks 904, 1002 with highest heat reclamation potential. In some examples, the harvesting analysis circuitry 110 may adjust, re-prioritize, or assign less weight to one or more of the filtering factors at one or more of blocks 1508, 1512, 1516, 1522, 1526, 1530, so that at least one rack 904, 1002 is identified for potential energy harvesting. For example, the harvesting analysis circuitry 1100 can prioritize consideration of criteria such as operational stability (block 1516) and adaptability (block 1522) and de-prioritize the weight given to the other criteria.

After the harvesting analysis circuitry 1100 selects a rack for energy harvesting at block 1536, the workload determination circuitry 1102 outputs identification of the selected rack via, for example, a user interface that displays the location of the selected rack in the data center (block 1540). Also, at block 1542, the workload determination circuitry 1102 causes the electronic component(s) 906, 1004 of the selected rack 904, 1002 to operate to facilitate energy harvesting conditions by assigning and/or transferring workloads to the electronic component(s) 906, 1004 of the selected rack 904, 1002.

At blocks 1544, 1546, and 1548, the CDU control circuitry 1104 determines if the coolant temperature should be adjusted as disclosed in connection with blocks 1244, 1246, 1248 of FIGS. 12A-12C and FIG. 14.

At blocks 1550, the monitoring circuitry 1106 monitors, for example, the temperature data 1112, the workload data 1108, the electronic component capacity data 1116, and the coolant temperature data 1122 to determine if adjustments should be made the conditions at the selected rack 904, 1002 (block 1552) or if another rack 904, 1002 should be selected for energy harvesting (block 1554), as disclosed in connection with blocks 1250, 1252, and 1254 of FIGS. 12A-12C. The example instructions 1500 end at block 1556.

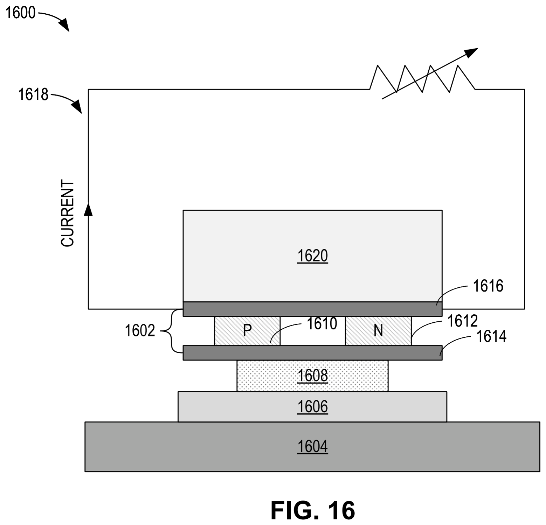

FIG. 16 illustrates an example assembly 1600 including a thermoelectric generator 1602 in accordance with teachings of this disclosure. The example assembly 1600 includes a board 1604 to support a package substrate 1606. A heat source 1608 outputs heat during operation. The heat source 1608 can include an electronic component such as a CPU, GPU, NPU, memory, etc.

The thermoelectric generator (TEG) 1602 of FIG. 16 includes a p-type semiconductor 1610 and a n-type semiconductor 1612 between first and second conductor materials 1614, 1616 defining a circuit 1618. A heat sink 1620 is located opposite the heat source 1608 such that the thermoelectric generator 1602 is between the heat source 1608 and the heat sink 1620. In the example of FIG. 16, the heat sink 1620 may be cooled via a cooling medium such as air or liquid. The thermoelectric generator 1602 converts a temperature gradient between opposing ends of the respective semiconductors 1610, 1612 (i.e., the ends proximate to the heat source 1608 and the ends proximate to the heat sink 1620) to electric power. A magnitude of the current flowing in the circuit 1618 is proportional to the temperature difference such that a larger temperature differential results in greater current flow through the circuit 1618.

As disclosed in connection with FIG. 9, the example workload management circuitry 902 can control scheduling or distribution of workloads to the electronic component(s) (e.g., the heat source(s) 1608) including TEG(s) 1602 to amplify a temperature difference between the heat source 1608 (e.g., an external surface of the heat source 1608) and the cooling medium (e.g., air, liquid), thereby increasing (e.g., maximizing) energy output and facilitating energy harvesting at a rack including the electronic component(s). Increasing the temperature gradient at the TEG 1602 by increasing the heat output by the heat source 1608 (e.g., through performance of workloads) can provide for increased electric power output via the TEG 1602. Thus, by concentrating performance of workloads at a rack rather than avoiding hotspots, the example workload management circuitry 902 can enable heat output by the heat source 1608 during performance of workloads to be re-used in the form of electric power, particularly in environments where other sources of renewable energy (e.g., solar, wind, hydroelectric energy) may not be available, such as data centers located under the sea.

FIG. 17 is a flowchart representative of example machine-readable instructions and/or example operations 1700 that may be executed, instantiated, and/or performed by programmable circuitry to control assignment of workloads for performance by electronic component(s) to increase (e.g., amplify, maximize) heat differentials at TEG(s) associated with the electronic component(s) and thus, increase electric power output via the TEG(s). Instead of assigning workloads to avoid creating hotspots, the example machine-readable instructions and/or the example operations 1700 facilitate formation of hotspots for energy harvesting purposes through increased utilization of certain electronic components via workload distribution.

The example instructions 1700 of FIG. 17 begin at block 1702, at which the harvesting analysis circuitry 1100 of the example workload management circuitry 902 of FIG. 11 identifies workload(s) to be assigned for performance by the electronic component(s) 906, 1004 based on the workload data 1108.

At block 1704, the harvesting analysis circuitry 1100 determines whether to (a) bias a workload assignment algorithm 1128 (e.g., a third party-provided workload assignment algorithm) that attempts to avoid hotspots when assigning the workload(s) so that the workload assignment algorithm 1128 reverses the approach of avoiding hotspots or (b) to execute a workload assignment algorithm 1128 that favors creating hotspots for energy harvesting purposes.

In examples in which a workload assignment algorithm 1128 that seeks to avoid the creation of hotspots is to be used (i.e., "A" at block 1704), then control proceeds to block 1706, where the harvesting analysis circuitry 1100 adjusts the temperatures of the electronic component(s) 906, 1004 to bias the workload assignment algorithm 1128 such that the workload assignment algorithm 1128 assigns jobs to the electronic component(s) with higher temperatures, rather than avoiding creating hot spots as the algorithm is expected to do. For example, at block 1706, the harvesting analysis circuitry 1100 executes a temperature transform to transform the temperature data 1112 for the electronic component(s) 906, 1004 as disclosed in connection with FIG. 18 to affect the assignment of workload(s) to the electronic component(s) 906, 1004 by the workload assignment algorithm 1128. In particular, the harvesting analysis circuitry 1100 adjusts the temperature data so that (a) the electronic component(s) 906, 1004 with lower temperatures that would typically be assigned workload(s) by the workload assignment algorithm 1128 are less likely to be assigned workload(s) by the workload assignment algorithm 1128 and (b) the electronic component(s) 906, 1004 with higher temperatures that would typically not be assigned workload(s) by the workload assignment algorithm 1128 to avoid hotspots are changed are more likely to be assigned workload(s) to concentrate heat output for energy harvesting. Thus, the harvesting analysis circuitry 1100 biases the workload assignment algorithm 1128 by adjusting the temperature data 1112 used by the algorithm 1128.

At block 1708, the harvesting analysis circuitry 1100 executes the workload assignment algorithm 1128 using the transformed temperature data to select electronic component(s) 906, 104 to perform the workload(s). Because of the transformed temperature data, the workload assignment algorithm 1128 is more likely to select the electronic component(s) 906, 1004 that are already generating increased heat to receive workloads rather than the electronic component(s) 906, 1004 associated with the lower temperature(s). Thus, as a result of the transformed temperature data, the workload assignment algorithm 1128 causes the electronic component(s) 906, 1004 associated with the higher temperature(s) to further increase heat output for energy harvesting.

At block 1710, the workload determination circuitry 1102 of the example workload management circuitry 902 of FIG. 11 causes the electronic component(s) 906, 1004 to perform the workload(s) by assigning and/or transferring the workload(s) to the electronic component(s) 906, 1004.

In examples in which the harvesting analysis circuitry 1100 is to execute a workload assignment algorithm 1128 that prioritizes assigning workloads to electronic component(s) associated with higher temperatures to concentrate heat output (i.e., "B" at block 1704), then control proceeds from block 1704 to block 1712. At block 1712, the harvesting analysis circuitry 1100 ranks the electronic component(s) 906, 1004 by temperature using the temperature data 1112. At block 1714, the harvesting analysis circuitry 1100 identifies the electronic component 906, 1004 associated with the highest temperature (e.g., the hottest electronic component 906, 1004, the most amount of heat generated by the electronic component 906, 1004) based on the ranking. At block 1716, the harvesting analysis circuitry 1100 identifies the utilization or current performance data for the electronic component 906, 1004 associated with the highest temperature based on, for example, the workload data 1108 and the electronic component capacity data 1116.

At block 1718, the harvesting analysis circuitry 1100 determines if the electronic component 906, 1004 associated with the highest temperature has the capacity to perform the workload(s) based on, for example, the estimated resources that execution of the workload(s) will consume, the current workload(s) assigned to the electronic component 906, 1004, the historical performance data 1118 for the electronic component 906, 1004 (e.g., failure rate), etc.

If the harvesting analysis circuitry 1100 determines that the electronic component 906, 1004 associated with the highest temperature has the capacity to perform the workload(s), then control proceeds to block 1710, where the workload determination circuitry 1102 causes the electronic component 906, 1004 to perform the workload(s) by assigning and/or transferring the workload(s) to the electronic component 906, 1004.

If the harvesting analysis circuitry 1100 determines that the electronic component 906, 1004 associated with the highest temperature does not have the capacity to perform the workload(s), then the harvesting analysis circuitry 1100 identifies the next electronic component 906, 1004 in the ranking by temperature and evaluates the utilization of that electronic component 906, 1004 (blocks 1720, 1722). The harvesting analysis circuitry 1100 continues to evaluate the electronic components 906, 1004 based on the temperature ranking until the harvesting analysis circuitry 1100 identifies an electronic component 906, 1004 that has the capacity to perform the workload, where the selected electronic component 906, 1004 is preferably associated with increased heat output prior to being assigned the (additional) workload(s) to facilitate heat concentration. If the harvesting analysis circuitry 1100 does not identify any electronic components 906, 1004 with capacity to perform the workloads, then the workload determination circuitry 1102 outputs an error (block 1724) and the instructions 1700 end (block 1726).

FIG. 18 is a flowchart of an example implementation of block 1706 of the example operations 1700 of FIG. 17 for executing a temperature transform using the temperature data 1112 for the electronic component(s) 906, 1004. At block 1800, the harvesting analysis circuitry 1100 obtains the temperature data 1112 for the electronic component(s) 906, 1004. At block 1802, the harvesting analysis circuitry 1100 applies a transform function to the temperature data 1112. An example transform function can be defined as *f(x)* = C *- x,* where *x* is the temperature of the electronic component 906, 1004 in the temperature data 1112 and C is a constant. For example, if C = 50 and the temperature *x* of a first electronic component 906, 1004 in the temperature data 1112 is 20, then the transformed temperature *f(x)* for the first electronic component 906, 1004 is 30 (*f(x) = C - x =* 50 - 20 = 30); as another example, if C = 50 and the temperature x of a second electronic component 906, 1004 in the temperature data 1112 is 30, then the transformed temperature *f(x)* for the second electronic component 906, 1004 is 20 (*f(x)* = C *- x =* 50 - 30 = 20). Thus, the transform function changes the temperature associated with the electronic components 906, 1004 so that the second electronic component 906, 1004 appears to have a lower temperature than the first electronic component 906, 1004. Therefore, the workload assignment algorithm 1128 assigns the workload(s) to the second electronic component 906, 1004 rather than the first electronic component 906, 1004. As a result, the second electronic component 906, 1004 outputs more heat for energy harvesting. At block 1804, the harvesting analysis circuitry 1100 outputs the transformed or adjusted temperatures and control proceeds to block 1708 of FIG. 17.

FIG. 19 is a flowchart representative of example machine-readable instructions and/or example operations 1900 that may be executed, instantiated, and/or performed by programmable circuitry to maintain energy harvesting conditions at one or more electronic components or, more generally, rack(s). The example machine-readable instructions and/or the example operations 1900 of FIG. 19 can be used when, for example, workloads have been completed by electronic component(s) of rack(s) selected for energy harvesting, however, there are no incoming jobs to the replace the completed workloads and/or the incoming workloads will not generate as much heat. To avoid a reduction in heat output by the electronic components, which can reduce the energy harvesting efforts, the example instructions 1900 of FIG. 19 can be used to facilitate and/or maintain the energy harvesting efforts by identifying electronic components that have workloads that can be migrated to electronic components that are (or were) producing greater heat.

The example instructions 1900 begin at block 1902 with the harvesting analysis circuitry 1100 of the example workload management circuitry 902 of FIG. 11 obtaining the workload data 1108 and the temperature data 1112 for the electronic components 906, 1004 (i.e., the current workload(s) being performed by the electronic components 906, 1004 and the current temperature data associated with the electronic components 906, 1004). At block 1904, the harvesting analysis circuitry 1100 generates a first ranking of the electronic components 906, 1004 based on utilization as determined by, for example, the electronic component capacity data 1116, the workload data 1108, and/or the heat output indicated in the temperature data 1112. Also, the harvesting analysis circuitry 1100 generates a second ranking of the electronic components 906, 1004 by temperature (e.g., heat generated) based on the temperature data 1112.

At block 1906, the harvesting analysis circuitry 1100 identifies the electronic component 906, 1004 with the lowest utilization level based on the first ranking. At block 1908, the harvesting analysis circuitry 1100 determines if the lowest utilized electronic component 906, 1004 has one or more migratable workloads, or workload(s) that can be transferred to other electronic component(s) 906, 1004, such as the electronic component 906, 1004 in the temperature ranking with the highest temperature (and, thus, heat output).

If the workload(s) are migratable, in some examples, the harvesting analysis circuitry 1100 can consider other factors prior to causing the workload(s) to be migrated from the lowest utilized electronic component 906, 1004 to another electronic component 906, 1004 that has capacity to perform the workload(s) and that is generating a greater heat output. For example, although transferring additional workload(s) to the electronic component 906, 1004 associated with the highest temperature can increase the heat output by the electronic component 906, 1004 for energy harvesting purposes, the additional workload(s) may cause the electronic component 906, 1004 to run more slowly, which could violate, for example a service level agreement; may introduce operational instabilities at the electronic component 906, 1004, etc. Thus, in some examples, at block 1909 the harvesting analysis circuitry 1100 can evaluate, based on data such as the electronic component capacity data 1116, the historical performance data 1118, and/or other data 1124 such as SLA data, whether the workload(s) should be transferred to the electronic component 906, 1004 associated with the highest temperature and with capacity or if another electronic component 906, 1004 (e.g., the next hottest electronic component) should be considered to receive the workload(s) (block 1910)

If the harvesting analysis circuitry 1100 determines that the workload(s) should be transferred, then at block 1911, the workload determination circuitry 1102 of the example workload management circuitry 902 of FIG. 11 causes the workload(s) to be transferred or migrated to the electronic component 906, 1004 that is (a) associated with the highest temperature and (b) has capacity to perform the additional workload(s). As a result, the electronic component 906, 1004 already generating increased heat continues to provide for increased heat output (e.g., by operating at increased frequency to perform the newly received workloads).

If the electronic component 906, 1004 having the lowest utilization identified does not have any migratable workload(s) (blocks 1906, 1908), then control continues to block 1912, where the harvesting analysis circuitry 1100 determines if there are other electronic component(s) 906, 1004 in the utilization ranking generated at block 1904 with low utilization and migratable workloads. If there are other electronic component(s) in the list from which workload(s) can considered for migration, then control proceeds to block 1914, at which the harvesting analysis circuitry 1100 identifies the electronic component 906, 1004 with the next lowest utilization level (e.g., based on the workload data 1108, the temperature data 1112, and/or the electronic component capacity data 1116). Control returns to block 1908 to determine if the electronic component 906, 1004 identified at block 1914 has migratable workload(s). If there are no further electronic component 906, 1004 in the utilization ranking to analyze with respect to transferrable workloads, then control returns to block 1902 to obtain additional workload data and temperature data for the electronic components 906, 1004.

In examples in which the workload determination circuitry 1102 causes the workload(s) to be transferred to the electronic component associated with the highest temperature and with capacity to perform the workload(s) (block 1911), then at block 1916, the harvesting analysis circuitry 1100 determines if the electronic component 906, 1004 from which the workload(s) were transferred can be put in a lower power state (e.g., change from a first power state to a second, lower power state). For example, the harvesting analysis circuitry 1100 can determine that the electronic component 906, 1004 from which the workload(s) were transferred can be put in a lower power state if the workload(s) remaining at the electronic component 906, 1004 can be performed in the lower state or if there are no further workloads being performed or scheduled to be performed by that electronic component 906, 1004 within a threshold period of time.

If the electronic from which workload(s) are transferred can be put in a lower power state, then at block 1918, the workload determination circuitry 1102 generates and outputs instructions to cause the electronic component 906, 1004 to enter a lower power state. In this way, the heat generation is concentrated at the electronic component 906, 1004 to which the workload(s) have been transferred to maintain or increase energy harvesting by increasing utilization of those electronic component(s). Further, the electronic component(s) 906, 1004 having lower utilization or no utilization can be placed in lower power state to improve energy efficiency, conserve resources, and lower operational costs within the data center 900, 1000.

If, at block 1920, the harvesting analysis circuitry 1100 receives indication that an incoming workload should be assigned to an electronic component 906, 1004, then control proceeds execute the example instructions 1700 of FIG. 17 to assign the new workload (e.g., to one of the electronic components 906, 1004 that have not been placed in a low power state).

If the harvesting analysis circuitry 1100 does not receive indication of a new workload to assign, then the monitoring circuitry 1106 of the example workload management circuitry 902 can continue to monitor the workload data 1108 and temperature data 1112 for the electronic component(s) 906, 1004 as the electronic component(s) 906, 1004 complete workloads. Based on the monitoring, the monitoring circuitry 1106 determines if adjustments to the existing workload assignments should be performed to maintain energy harvesting conditions (blocks 1922, 1924).

FIG. 20 is a block diagram of an example programmable circuitry platform 2000 structured to execute and/or instantiate the example machine-readable instructions and/or the example operations of FIGS. 12A-12C, 13, 14, 15A-15C, 17, 18, and 19 to implement the workload management circuitry 902 of FIG. 11. The programmable circuitry platform 2000 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device.

The programmable circuitry platform 2000 of the illustrated example includes programmable circuitry 2012. The programmable circuitry 2012 of the illustrated example is hardware. For example, the programmable circuitry 2012 can be implemented by one or more integrated circuits, logic circuits, FPGAs, microprocessors, CPUs, GPUs, DSPs, and/or microcontrollers from any desired family or manufacturer. The programmable circuitry 2012 may be implemented by one or more semiconductor based (e.g., silicon based) devices. In this example, the programmable circuitry 2012 implements the example harvesting analysis circuitry 1100, the example workload determination circuitry 1102, the example CDU control circuitry 1104, and the example monitoring circuitry 1106.

The programmable circuitry 2012 of the illustrated example includes a local memory 2013 (e.g., a cache, registers, etc.). The programmable circuitry 2012 of the illustrated example is in communication with main memory 2014, 2016, which includes a volatile memory 2014 and a non-volatile memory 2016, by a bus 2018. The volatile memory 2014 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 2016 may be implemented by flash memory and/or any other desired type of memory device. Access to the main memory 2014, 2016 of the illustrated example is controlled by a memory controller 2017. In some examples, the memory controller 2017 may be implemented by one or more integrated circuits, logic circuits, microcontrollers from any desired family or manufacturer, or any other type of circuitry to manage the flow of data going to and from the main memory 2014, 2016.

The programmable circuitry platform 2000 of the illustrated example also includes interface circuitry 2020. The interface circuitry 2020 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 2022 are connected to the interface circuitry 2020. The input device(s) 2022 permit(s) a user (e.g., a human user, a machine user, etc.) to enter data and/or commands into the programmable circuitry 2012. The input device(s) 2022 can be implemented by, for example, an audio sensor, a microphone, a camera (still or video), a keyboard, a button, a mouse, a touchscreen, a trackpad, a trackball, an isopoint device, and/or a voice recognition system.

One or more output devices 2024 are also connected to the interface circuitry 2020 of the illustrated example. The output device(s) 2024 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 2020 of the illustrated example, thus, typically includes a graphics driver card, a graphics driver chip, and/or graphics processor circuitry such as a GPU.

The interface circuitry 2020 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 2026. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 2000 of the illustrated example also includes one or more mass storage discs or devices 2028 to store firmware, software, and/or data. Examples of such mass storage discs or devices 2028 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 2032, which may be implemented by the machine-readable instructions of FIGS. 12A-12C, 13, 14, 15A-15C, 17, 18, and 19, may be stored in the mass storage device 2028, in the volatile memory 2014, in the non-volatile memory 2016, and/or on at least one non-transitory computer-readable storage medium such as a CD or DVD which may be removable.

FIG. 21 is a block diagram of an example implementation of the programmable circuitry 2012 of FIG. 20. In this example, the programmable circuitry 2012 of FIG. 20 is implemented by a microprocessor 2100. For example, the microprocessor 2100 may be a general-purpose microprocessor (e.g., general-purpose microprocessor circuitry). The microprocessor 2100 executes some or all of the machine-readable instructions of the flowcharts of FIGS. 12A-12C, 13, 14, 15A-15C, 17, 18, and 19 to effectively instantiate the circuitry of FIG. 11 as logic circuits to perform operations corresponding to those machine-readable instructions. In some such examples, the circuitry of FIG. 11 is instantiated by the hardware circuits of the microprocessor 2100 in combination with the machine-readable instructions. For example, the microprocessor 2100 may be implemented by multi-core hardware circuitry such as a CPU, a DSP, a GPU, an XPU, etc. Although it may include any number of example cores 2102 (e.g., 1 core), the microprocessor 2100 of this example is a multi-core semiconductor device including N cores. The cores 2102 of the microprocessor 2100 may operate independently or may cooperate to execute machine-readable instructions. For example, machine code corresponding to a firmware program, an embedded software program, or a software program may be executed by one of the cores 2102 or may be executed by multiple ones of the cores 2102 at the same or different times. In some examples, the machine code corresponding to the firmware program, the embedded software program, or the software program is split into threads and executed in parallel by two or more of the cores 2102. The software program may correspond to a portion or all of the machine-readable instructions and/or operations represented by the flowcharts of FIGS. 12A-12C, 13, 14, 15A-15C, 17, 18, and 19.

The cores 2102 may communicate by a first example bus 2104. In some examples, the first bus 2104 may be implemented by a communication bus to effectuate communication associated with one(s) of the cores 2102. For example, the first bus 2104 may be implemented by at least one of an Inter-Integrated Circuit (I2C) bus, a Serial Peripheral Interface (SPI) bus, a PCI bus, or a PCIe bus. Additionally or alternatively, the first bus 2104 may be implemented by any other type of computing or electrical bus. The cores 2102 may obtain data, instructions, and/or signals from one or more external devices by example interface circuitry 2106. The cores 2102 may output data, instructions, and/or signals to the one or more external devices by the interface circuitry 2106. Although the cores 2102 of this example include example local memory 2120 (e.g., Level 1 (L1) cache that may be split into an L1 data cache and an L1 instruction cache), the microprocessor 2100 also includes example shared memory 2110 that may be shared by the cores (e.g., Level 2 (L2 cache)) for high-speed access to data and/or instructions. Data and/or instructions may be transferred (e.g., shared) by writing to and/or reading from the shared memory 2110. The local memory 2120 of each of the cores 2102 and the shared memory 2110 may be part of a hierarchy of storage devices including multiple levels of cache memory and the main memory (e.g., the main memory 2014, 2016 of FIG. 20). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 2102 may be referred to as a CPU, DSP, GPU, etc., or any other type of hardware circuitry. Each core 2102 includes control unit circuitry 2114, arithmetic and logic (AL) circuitry (sometimes referred to as an ALU) 2116, a plurality of registers 2118, the local memory 2120, and a second example bus 2122. Other structures may be present. For example, each core 2102 may include vector unit circuitry, single instruction multiple data (SIMD) unit circuitry, load/store unit (LSU) circuitry, branch/jump unit circuitry, floating-point unit (FPU) circuitry, etc. The control unit circuitry 2114 includes semiconductor-based circuits structured to control (e.g., coordinate) data movement within the corresponding core 2102. The AL circuitry 2116 includes semiconductor-based circuits structured to perform one or more mathematic and/or logic operations on the data within the corresponding core 2102. The AL circuitry 2116 of some examples performs integer based operations. In other examples, the AL circuitry 2116 also performs floating-point operations. In yet other examples, the AL circuitry 2116 may include first AL circuitry that performs integer-based operations and second AL circuitry that performs floating-point operations. In some examples, the AL circuitry 2116 may be referred to as an Arithmetic Logic Unit (ALU).

The registers 2118 are semiconductor-based structures to store data and/or instructions such as results of one or more of the operations performed by the AL circuitry 2116 of the corresponding core 2102. For example, the registers 2118 may include vector register(s), SIMD register(s), general-purpose register(s), flag register(s), segment register(s), machine-specific register(s), instruction pointer register(s), control register(s), debug register(s), memory management register(s), machine check register(s), etc. The registers 2118 may be arranged in a bank as shown in FIG. 21. Alternatively, the registers 2118 may be organized in any other arrangement, format, or structure, such as by being distributed throughout the core 2102 to shorten access time. The second bus 2122 may be implemented by at least one of an I2C bus, a SPI bus, a PCI bus, or a PCIe bus.

Each core 2102 and/or, more generally, the microprocessor 2100 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 2100 is a semiconductor device fabricated to include many transistors interconnected to implement the structures described above in one or more integrated circuits (ICs) contained in one or more packages.

The microprocessor 2100 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 2100, in the same chip package as the microprocessor 2100 and/or in one or more separate packages from the microprocessor 2100.

FIG. 22 is a block diagram of another example implementation of the programmable circuitry 2012 of FIG. 20. In this example, the programmable circuitry 2012 is implemented by FPGA circuitry 2200. For example, the FPGA circuitry 2200 may be implemented by an FPGA. The FPGA circuitry 2200 can be used, for example, to perform operations that could otherwise be performed by the example microprocessor 2100 of FIG. 21 executing corresponding machine-readable instructions. However, once configured, the FPGA circuitry 2200 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 2100 of FIG. 21 described above (which is a general purpose device that may be programmed to execute some or all of the machine-readable instructions represented by the flowchart(s) of FIGS. 12A-12C, 13, 14, 15A-15C, 17, 18, and 19 but whose interconnections and logic circuitry are fixed once fabricated), the FPGA circuitry 2200 of the example of FIG. 22 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 12A-12C, 13, 14, 15A-15C, 17, 18, and 19. In particular, the FPGA circuitry 2200 may be thought of as an array of logic gates, interconnections, and switches. The switches can be programmed to change how the logic gates are interconnected by the interconnections, effectively forming one or more dedicated logic circuits (unless and until the FPGA circuitry 2200 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 12A-12C, 13, 14, 15A-15C, 17, 18, and 19. As such, the FPGA circuitry 2200 may be configured and/or structured to effectively instantiate some or all of the operations/functions corresponding to the machine-readable instructions of the flowchart(s) of FIGS. 12A-12C, 13, 14, 15A-15C, 17, 18, and 19 as dedicated logic circuits to perform the operations/functions corresponding to those software instructions in a dedicated manner analogous to an ASIC. Therefore, the FPGA circuitry 2200 may perform the operations/functions corresponding to the some or all of the machine-readable instructions of FIGS. 12A-12C, 13, 14, 15A-15C, 17, 18, and 19 faster than the general-purpose microprocessor can execute the same.

In the example of FIG. 22, the FPGA circuitry 2200 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 2200 of FIG. 22 may access and/or load the binary file to cause the FPGA circuitry 2200 of FIG. 22 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2200 of FIG. 22 to cause configuration and/or structuring of the FPGA circuitry 2200 of FIG. 22, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 2200 of FIG. 22 may access and/or load the binary file to cause the FPGA circuitry 2200 of FIG. 22 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2200 of FIG. 22 to cause configuration and/or structuring of the FPGA circuitry 2200 of FIG. 22, or portion(s) thereof.

The FPGA circuitry 2200 of FIG. 22, includes example input/output (I/O) circuitry 2202 to obtain and/or output data to/from example configuration circuitry 2204 and/or external hardware 2206. For example, the configuration circuitry 2204 may be implemented by interface circuitry that may obtain a binary file, which may be implemented by a bit stream, data, and/or machine-readable instructions, to configure the FPGA circuitry 2200, or portion(s) thereof. In some such examples, the configuration circuitry 2204 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 2206 may be implemented by external hardware circuitry. For example, the external hardware 2206 may be implemented by the microprocessor 2100 of FIG. 21.

The FPGA circuitry 2200 also includes an array of example logic gate circuitry 2208, a plurality of example configurable interconnections 2210, and example storage circuitry 2212. The logic gate circuitry 2208 and the configurable interconnections 2210 are configurable to instantiate one or more operations/functions that may correspond to at least some of the machine-readable instructions of FIGS. [Flowcharts] and/or other desired operations. The logic gate circuitry 2208 shown in FIG. 22 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 2208 to enable configuration of the electrical structures and/or the logic gates to form circuits to perform desired operations/functions. The logic gate circuitry 2208 may include other electrical structures such as look-up tables (LUTs), registers (e.g., flip-flops or latches), multiplexers, etc.

The configurable interconnections 2210 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 2208 to program desired logic circuits.

The storage circuitry 2212 of the illustrated example is structured to store result(s) of the one or more of the operations performed by corresponding logic gates. The storage circuitry 2212 may be implemented by registers or the like. In the illustrated example, the storage circuitry 2212 is distributed amongst the logic gate circuitry 2208 to facilitate access and increase execution speed.

The example FPGA circuitry 2200 of FIG. 22 also includes example dedicated operations circuitry 2214. In this example, the dedicated operations circuitry 2214 includes special purpose circuitry 2216 that may be invoked to implement commonly used functions to avoid the need to program those functions in the field. Examples of such special purpose circuitry 2216 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 2200 may also include example general purpose programmable circuitry 2218 such as an example CPU 2220 and/or an example DSP 2222. Other general purpose programmable circuitry 2218 may additionally or alternatively be present such as a GPU, an XPU, etc., that can be programmed to perform other operations.

Although FIGS. 21 and 22 illustrate two example implementations of the programmable circuitry 2012 of FIG. 20, many other approaches are contemplated. For example, FPGA circuitry may include an on-board CPU, such as one or more of the example CPU 2220 of FIG. 21. Therefore, the programmable circuitry 2012 of FIG. 20 may additionally be implemented by combining at least the example microprocessor 2100 of FIG. 21 and the example FPGA circuitry 2200 of FIG. 22. In some such hybrid examples, one or more cores 2102 of FIG. 21 may execute a first portion of the machine-readable instructions represented by the flowchart(s) of FIGS. 12A-12C, 13, 14, 15A-15C, 17, 18, and 19 to perform first operation(s)/function(s), the FPGA circuitry 2200 of FIG. 22 may be configured and/or structured to perform second operation(s)/function(s) corresponding to a second portion of the machine-readable instructions represented by the flowcharts of FIG. 12A-12C, 13, 14, 15A-15C, 17, 18, and 19, and/or an ASIC may be configured and/or structured to perform third operation(s)/function(s) corresponding to a third portion of the machine-readable instructions represented by the flowcharts of FIGS. 12A-12C13, 14, 15A-15C, 17, 18, and 19.

It should be understood that some or all of the circuitry of FIG. 11 may, thus, be instantiated at the same or different times. For example, same and/or different portion(s) of the microprocessor 2100 of FIG. 21 may be programmed to execute portion(s) of machine-readable instructions at the same and/or different times. In some examples, same and/or different portion(s) of the FPGA circuitry 2200 of FIG. 22 may be configured and/or structured to perform operations/functions corresponding to portion(s) of machine-readable instructions at the same and/or different times.

In some examples, some or all of the circuitry of FIG. 11 may be instantiated, for example, in one or more threads executing concurrently and/or in series. For example, the microprocessor 2100 of FIG. 21 may execute machine-readable instructions in one or more threads executing concurrently and/or in series. In some examples, the FPGA circuitry 2200 of FIG. 22 may be configured and/or structured to carry out operations/functions concurrently and/or in series. Moreover, in some examples, some or all of the circuitry of FIG. 11 may be implemented within one or more virtual machines and/or containers executing on the microprocessor 2100 of FIG. 21.

In some examples, the programmable circuitry 2012 of FIG. 20 may be in one or more packages. For example, the microprocessor 2100 of FIG. 21 and/or the FPGA circuitry 2200 of FIG. 22 may be in one or more packages. In some examples, an XPU may be implemented by the programmable circuitry 2012 of FIG. 20, which may be in one or more packages. For example, the XPU may include a CPU (e.g., the microprocessor 2100 of FIG. 21, the CPU 2220 of FIG. 22, etc.) in one package, a DSP (e.g., the DSP 2222 of FIG. 22) in another package, a GPU in yet another package, and an FPGA (e.g., the FPGA circuitry 2200 of FIG. 22) in still yet another package.

A block diagram illustrating an example software distribution platform 2305 to distribute software such as the example machine-readable instructions 2032 of FIG. 20 to other hardware devices (e.g., hardware devices owned and/or operated by third parties from the owner and/or operator of the software distribution platform) is illustrated in FIG. 23. The example software distribution platform 2305 may be implemented by any computer server, data facility, cloud service, etc., capable of storing and transmitting software to other computing devices. The third parties may be customers of the entity owning and/or operating the software distribution platform 2305. For example, the entity that owns and/or operates the software distribution platform 2305 may be a developer, a seller, and/or a licensor of software such as the example machine-readable instructions 2032 of FIG. 20. The third parties may be consumers, users, retailers, OEMs, etc., who purchase and/or license the software for use and/or re-sale and/or sub-licensing. In the illustrated example, the software distribution platform 2305 includes one or more servers and one or more storage devices. The storage devices store the machine-readable instructions 2032, which may correspond to the example machine-readable instructions of FIGS. 12A-12C, 13, 14, 15A-15C, 17, 18, and 19, as described above. The one or more servers of the example software distribution platform 2305 are in communication with an example network 2310, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 2032 from the software distribution platform 2305. For example, the software, which may correspond to the example machine-readable instructions of FIGS. 12A-12C, 13, 14, 15A-15C, 17, 18, and 19, may be downloaded to the example programmable circuitry platform 2000, which is to execute the machine-readable instructions 2032 to implement the workload management circuitry 902. In some examples, one or more servers of the software distribution platform 2305 periodically offer, transmit, and/or force updates to the software (e.g., the example machine-readable instructions 2032 of FIG. 20) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that provide for energy reclamation from electronic components in a data center via management of workloads assigned to the electronic components. Examples disclosed herein concentrate heat generation at particular electronic components and/or racks carrying electronic components by concentrating performance of workloads to provide for efficient energy harvesting. In some examples, an AI-driven algorithm is used to select racks for energy harvesting based on various criteria or weighting factors that seek to select a rack with electronic components that have capacity to perform increased thermal loads at sustained rates without sacrificing longevity and reliability of the electronic components. In some examples, the concentration of workloads at one or more electronic components can increase temperature differentials at thermoelectric generators, thereby providing for efficient generation of electrical energy. Some examples disclosed herein provide for increased utilization of electronic components for energy harvesting while balancing energy efficiency by placing non-harvesting electronic components in lower power states.

Example systems, apparatus, and methods for energy harvesting in data are disclosed. Further examples and combinations thereof include the following:
Example 1 includes an apparatus comprising interface circuitry; machine-readable instructions; and at least one processor circuit to at least one of instantiate or execute the machine-readable instructions to estimate first power consumption values for electronic components of a first rack; estimate second power consumption values for electronic components of a second rack; determine a first selection score for the first rack based on the first power consumption values and a second selection score for the second rack based on the second power consumption values; select a first electronic component of the first rack or a second electronic component of the second rack to receive a workload based on the first selection score and the second selection score; and cause the selected one of the first electronic component or the second electronic component to perform the workload.
Example 2 includes the apparatus of example 1, wherein one or more of the at least one processor circuit is to generate remaining operating life values for the electronic components of the first rack; and determine the first selection score based on the first power consumption values and the remaining life values.
Example 3 includes the apparatus of examples 1 or 2, wherein one or more of the at least one processor circuit is to select the first electronic component of the first rack to perform the workload; and verify the selection based on a maintenance schedule for one or more of the electronic components of the first rack.
Example 4 includes the apparatus of any of examples 1-3, wherein one or more of the at least one processor circuit is to verify the selection based on historical performance data for the first electronic component.
Example 5 includes the apparatus of any of examples 1-4, wherein prior to selecting the first electronic component of the first rack or the second electronic component of the second rack to receive the workload, one or more of the at least one processor circuit is to detect a coolant input temperature for coolant flowing to the first rack; detect a coolant output temperature for the coolant after being exposed to the electronic components of the first rack; and estimate the first power consumption values based on a differential between the coolant input temperature and the coolant output temperature.
Example 6 includes the apparatus of any of examples 1-5, wherein one or more of the at least one processor circuit is to select the first electronic component of the first rack to perform the workload; and responsive to the selection of the first electronic component of the first rack to perform the workload, cause a cooling distribution unit to adjust a temperature of coolant that is to be exposed to the first electronic component.
Example 7 includes the apparatus of any of examples 1-6, wherein one or more of the at least one processor circuit is to select the first electronic component of the first rack to perform the workload; and cause the second electronic component of the second rack to change from a first power state to a second power state, the second power state being a lower power state than the first power state.
Example 8 includes an apparatus comprising interface circuitry; machine-readable instructions; and at least one processor circuit to at least one of instantiate or execute the machine-readable instructions to select a first electronic component associated with a highest temperature based on respective temperatures associated with a plurality of electronic components, the plurality of electronic components including the first electronic component; determine a workload capacity of the first electronic component based on one or more first workloads assigned to the first electronic component; based on the workload capacity, cause a second workload that is assigned to a second electronic component to be transferred to the first electronic component; and responsive to the second workload being transferred to the first electronic component, cause the second electronic component to change from a first power state to a second power state, the second power state lower than the first power state.
Example 9 includes the apparatus of example 8, wherein one or more of the at least one processor circuit is to execute a transformation function to adjust the temperatures associated with the plurality of temperatures to generate adjusted temperature data, wherein the selection of the first electronic component is based on the adjusted temperature data.
Example 10 includes the apparatus of examples 8 or 9, wherein, in the adjusted temperature data, the first electronic component is assigned a lower temperature than the second electronic component.
Example 11 includes the apparatus of any of examples 8-10, wherein one or more of the at least one processor circuit is to cause the second workload to be assigned to the first electronic component based on the workload capacity and historical performance data for the first electronic component.
Example 12 includes the apparatus of any of examples 8-11, wherein one or more of the at least one processor circuit is to identify a utilization of the second electronic component; and select the second electronic component from which the second workload is to be transferred based on the utilization of the second electronic component.
Example 13 includes the apparatus of any of examples 8-12, wherein the second electronic component is assigned a plurality of workloads, the plurality of workloads including the second workload, and one or more of the at least one processor circuit is to identify the second workload as a migratable workload; and select the second workload to be transferred from the second electronic component based on the identification of the second workload as migratable.
Example 14 includes a non-transitory machine-readable storage medium comprising instructions to cause at least one processor circuits to at least generate selection scores for respective ones of a plurality of racks, the plurality of racks including a first rack and a second rack, the first rack supporting a first electronic component and the second rack supporting a second electronic component; select the first rack of the plurality of racks as a harvesting rack based on the selection scores; and responsive to the selection of the first rack as the harvesting rack, cause workloads to be assigned to the first electronic component of the first rack to increase a number of workloads assigned to the first electronic component relative to the second electronic component of the second rack.
Example 15 includes the non-transitory machine-readable storage medium of example 14, wherein the instructions cause one or more of the at least one processor circuit to cause a cooling distribution unit to adjust a temperature of a coolant provided to the first rack.
Example 16 includes the non-transitory machine-readable storage medium of any of examples 14 or 15, wherein the instructions cause one or more of the at least one processor circuit to cause the second electronic component to change from a first power state to a second power state, the second power state lower than the first power state.
Example 17 includes the non-transitory machine-readable storage medium of any of examples 14-16, wherein the harvesting rack is a first harvesting rack, and the instructions cause one or more of the at least one processor circuit to select a third rack of the plurality of racks as another harvesting rack based on the selection scores; identify one or more electronic components of the third rack as scheduled for maintenance within a threshold time period; and select the first rack and not the third rack as the first harvesting rack responsive to the identification of the one or more electronic components of the third rack as scheduled for maintenance.
Example 18 includes the non-transitory machine-readable storage medium of any of examples 14-17, wherein the instructions cause one or more of the at least one processor circuit to verify the selection of the first rack as the harvesting rack based on historical performance data for the first electronic component.
Example 19 includes the non-transitory machine-readable storage medium of any of examples 14-18, wherein the instructions cause one or more of the at least one processor circuit to estimate power consumption values for electronic components of respective ones of the plurality of racks; estimate remaining life values for the electronic components of the respective ones of the plurality of racks; and generate the selections scores for the respective ones of the plurality of racks based on the power consumption values and the remaining life values for the corresponding electronic components of the respective ones of the plurality of racks.
Example 20 includes the non-transitory machine-readable storage medium of any of examples 14-19, wherein the instructions cause one or more of the at least one processor circuit to estimate the power consumption values based on thermal design power data for the electronic components of the respective ones of the plurality of racks.
Example 21 includes a system comprising a thermoelectric generator associated with a first electronic component; machine readable instructions; and at least one processor circuit to execute the instructions to at least determine, based on a first ranking, that a first temperature associated with the first electronic component is higher than a second temperature associated with a second electronic component; determine, based on a second ranking, that a utilization level of the second electronic component is less than a second utilization level of the first electronic component; and cause, based on the first ranking and the second ranking, a workload assigned to the second electronic component to be transferred to the first electronic component to increase a thermal gradient associated with the thermoelectric generator.
Example 22 includes the system of example 21, wherein one or more of the least one processor circuit is to, responsive to the transfer of the workload from the second electronic component to the first electronic component, cause a power state of the second electronic component to change from a first power state to a second power state, the second power state lower than the first power state.
Example 23 includes the system of examples 21 or 22, wherein the workload is a first workload and one or more of the at least one processor circuit is to execute a transform function to generate adjusted temperature data for the first electronic component and the second electronic component; and assign a second workload to the first electronic component based on the adjusted temperature data.
Example 24 includes the system of any of examples 21-23, wherein the workload is a first workload and one or more of the at least one processor circuit is to, responsive to completion of the first workload, cause a second workload assigned to the second electronic component or a third electronic component to be transferred to the first electronic component based on the first ranking and the second ranking.
Example 25 includes the system of any of examples 21-24, wherein the thermoelectric generator is operatively coupled to a battery.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry;
machine-readable instructions; and
at least one processor circuit to at least one of instantiate or execute the machine-readable instructions to:
estimate first power consumption values for electronic components of a first rack;
estimate second power consumption values for electronic components of a second rack;
determine a first selection score for the first rack based on the first power consumption values and a second selection score for the second rack based on the second power consumption values;
select a first electronic component of the first rack or a second electronic component of the second rack to receive a workload based on the first selection score and the second selection score; and
cause the selected one of the first electronic component or the second electronic component to perform the workload.

2. The apparatus of claim 1, wherein one or more of the at least one processor circuit is to:
generate remaining operating life values for the electronic components of the first rack; and
determine the first selection score based on the first power consumption values and the remaining life values.

3. The apparatus of claims 1 or 2, wherein one or more of the at least one processor circuit is to:
select the first electronic component of the first rack to perform the workload; and
verify the selection based on a maintenance schedule for one or more of the electronic components of the first rack.

4. The apparatus of claim 3, wherein one or more of the at least one processor circuit is to verify the selection based on historical performance data for the first electronic component.

5. The apparatus of claims 1 or 2, wherein prior to selecting the first electronic component of the first rack or the second electronic component of the second rack to receive the workload, one or more of the at least one processor circuit is to:
detect a coolant input temperature for coolant flowing to the first rack;
detect a coolant output temperature for the coolant after being exposed to the electronic components of the first rack; and
estimate the first power consumption values based on a differential between the coolant input temperature and the coolant output temperature.

6. The apparatus of claims 1 or 2, wherein one or more of the at least one processor circuit is to:
select the first electronic component of the first rack to perform the workload; and
responsive to the selection of the first electronic component of the first rack to perform the workload, cause a cooling distribution unit to adjust a temperature of coolant that is to be exposed to the first electronic component.

7. The apparatus of claims 1 or 2, wherein one or more of the at least one processor circuit is to:
select the first electronic component of the first rack to perform the workload; and
cause the second electronic component of the second rack to change from a first power state to a second power state, the second power state being a lower power state than the first power state.

8. A method comprising:
generating selection scores for respective ones of a plurality of racks, the plurality of racks including a first rack and a second rack, the first rack supporting a first electronic component and the second rack supporting a second electronic component;
selecting the first rack of the plurality of racks as a harvesting rack based on the selection scores; and
responsive to the selection of the first rack as the harvesting rack, causing workloads to be assigned to the first electronic component of the first rack to increase a number of workloads assigned to the first electronic component relative to the second electronic component of the second rack.

9. The method of claim 8, including causing a cooling distribution unit to adjust a temperature of a coolant provided to the first rack.

10. The method of claims 8 or 9, including causing the second electronic component to change from a first power state to a second power state, the second power state lower than the first power state.

11. The method of claims 8 or 9, wherein the harvesting rack is a first harvesting rack, and including:
selecting a third rack of the plurality of racks as another harvesting rack based on the selection scores;
identifying one or more electronic components of the third rack as scheduled for maintenance within a threshold time period; and
selecting the first rack and not the third rack as the first harvesting rack responsive to the identification of the one or more electronic components of the third rack as scheduled for maintenance.

12. The method of claims 8 or 9, including verifying the selection of the first rack as the harvesting rack based on historical performance data for the first electronic component.

13. The method of claims 8 or 9, including:
estimating power consumption values for electronic components of respective ones of the plurality of racks;
estimating remaining life values for the electronic components of the respective ones of the plurality of racks; and
generating the selections scores for the respective ones of the plurality of racks based on the power consumption values and the remaining life values for the corresponding electronic components of the respective ones of the plurality of racks.

14. The method of claim 13, including estimating the power consumption values based on thermal design power data for the electronic components of the respective ones of the plurality of racks.

15. Machine-readable storage including machine-readable instructions to implement a method or realize an apparatus as claimed in any preceding claim.
